# EUROPÄISCHE PATENTSCHRIFT

(11) **EP 3 256 089 B1**
(45) Veröffentlichungstag und Bekanntmachung des Hinweises auf die Patenterteilung: **28.11.2018**
(21) Anmeldenummer: 16702712.7
(22) Anmeldetag: 03.02.2016
(51) Int. Cl.: A61G 13/10

(54) **SPANNKLAUE ZUR ANBRINGUNG AN EINER GLEITSCHIENE EINES OPERATIONSTISCHES**
CLAMPING CLAW FOR ATTACHING TO A SLIDE RAIL OF AN OPERATING TABLE
MÂCHOIRE DE SERRAGE DESTINÉE À ÊTRE MONTÉE SUR UNE GLISSIÈRE D'UNE TABLE D'OPÉRATION

(30) Priorität: 09.02.2015 DE 102015101829
(43) Veröffentlichungstag der Anmeldung: 20.12.2017
(73) Patentinhaber: Maquet GmbH, 76437 Rastatt (DE)
(72) Erfinder: KATZENSTEIN, Bernhard, 76473 Iffezheim (DE)
(74) Vertreter: Zacco GmbH
(86) Internationale Anmeldenummer: PCT/EP2016/052236
(87) Internationale Veröffentlichungsnummer: WO 2016/128267

(56) Entgegenhaltungen:
- WO-A2-2011/153081
- DE-U1- 29 500 046
- US-A1- 2009 013 507

## Beschreibung

Die Erfindung betrifft eine Spannklaue zur Anbringung an einer im Querschnitt rechteckigen Gleitschiene eines Operationstisches mit einem Grundkörper mit mindestens einer zur Anlage an der Gleitschiene ausgebildeten Anlagefläche. Ferner hat die Spannklaue eine an dem Grundkörper angebrachte Klemmstruktur, die eine um eine erste Drehachse drehbar gelagerte Welle und mindestens ein Anlageelement aufweist. Weiterhin hat die Spannklaue ein mit der Welle drehfest verbundenes Betätigungsorgan, das durch eine Schwenkbewegung von einer Ausgangsstellung in eine Sicherungsstellung bringbar ist, in der die Klemmstruktur in einem verriegelten Zustand ist, in dem die Anlagefläche des Grundkörpers und das Anlageelement der Klemmstruktur an der Gleitschiene anliegen.

Operationstische weisen üblicherweise längs ihrer Tischsegmente beidseitig sogenannte Gleitschienen auf, die in der Regel einen rechteckigen Querschnitt haben und dazu dienen, Zubehörteile, wie beispielsweise Lagerungshilfsmittel, an dem Operationstisch in der gewünschten Position zu befestigen. Zur Befestigung der Zubehörteile werden Spannklauen verwendet, die mit dem jeweiligen Zubehörteil gekoppelt sind und an der Gleitschiene angebracht werden.

In der einfachsten Bauform ist eine solche in Fachkreisen auch als Spannkloben bezeichnete Spannklaue aus einem klammerförmigen Teil gebildet, das auf die Gleitschiene aufgeschoben und dann mittels einer Klemmschraube in der gewünschten Position fixiert wird. Weiter entwickelte Bauformen ermöglichen es, Spannklauen an einer beliebigen Stelle auf der Gleitschiene einzuschwenken und somit schneller an der Gleitschiene zu befestigen, ohne auf einen Zugang von einem Ende der Gleitschiene her angewiesen zu sein. Zum Befestigen einer solchen Spannklaue ist in der Regel ein mit Hilfe eines Betätigungsorgans bewegbares Anlageelement vorgesehen, das an die Gleitschiene angeschwenkt werden kann, so dass die Gleitschiene von der Spannklaue fest eingespannt wird. Dies hat den Nachteil, dass die Spannklaue durch Anbringen an einer Gleitschiene mit unpassenden Abmessungen oder durch eine Fehlbedienung des Benutzers fehlerhaft an der Gleitschiene angebracht werden kann und dem Benutzer der Umstand des fehlerhaften Anbringens verborgen bleiben kann. Ferner kann es sein, dass solche Spannklauen weniger stabil ausgeführt sind und sich auch bei ordnungsgemäßem Anbringen an die Gleitschiene nicht zur Befestigung schweren Zubehörs, wie beispielsweise Göpelbeinschalen, eignen.

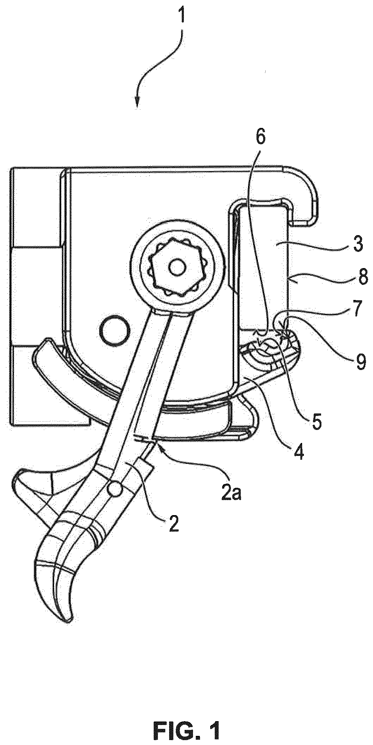

Aus einer eigenen nachveröffentlichten Anmeldung DE 10 2014 116 169.6 ist eine in Figur 1 in einer Seitenansicht gezeigte hakenförmige Spannklaue 1 mit einem Betätigungshebel 2 und einem durch den Betätigungshebel 2 an eine Gleitschiene 3 anschwenkbaren Schwenkriegel 4 bekannt. Bei einem ordnungsgemäßen Anschwenken des Schwenkriegels 4 an die Gleitschiene 3 liegt eine erste Anlagefläche 5 an einer unteren Schienenfläche 6 der Gleitschiene 3 und eine zweite Anlagefläche 7 des Schwenkriegels 4 an einer einem nicht dargestellten Operationstisch zugewandten inneren Schienenfläche 8 der Gleitschiene 3 an. In Figur 1 ist demgegenüber ein fehlerhaftes Anbringen der Spannklaue 1 an der Gleitschiene 3 veranschaulicht, bei dem die innere Schienenfläche 8 nicht von dem Schwenkriegel 4 kontaktiert wird. Ferner liegt in diesem fehlerhaften Zustand anstelle der Anlagefläche 5 eine nicht zur Anlage an die Gleitschiene 3 vorgesehene Fläche 9 des Schwenkriegels 4 an der unteren Schienenfläche 6 an.

Der Schwenkriegel 4 kann von einem die Spannklaue 1 betätigenden Benutzer nicht so gut eingesehen werden, dass das fehlerhafte Anbringen der Spannklaue 1 an der Gleitschiene 3 durch die fehlerhafte Anlage des Schwenkriegels 4 erkannt werden kann. Erschwerend kommt hierbei hinzu, dass der von dem Benutzer zum Anbringen der Spannklaue 1 betätigte Betätigungshebel 2 in diesem fehlerhaften Zustand in einer mit Hilfe eines Rastgesperres 2a verriegelten ordnungsgemäßen Stellung angeordnet ist, in der er sich auch befindet, wenn die Spannklaue 1 korrekt an die Gleitschiene 3 angelegt ist. Eine weitere Spannklaue zur Anbringung an einer Gleitschiene eines Operationstisches ist aus der US 2009/0013507 bekannt.

Aufgabe der Erfindung ist es, eine stabile Spannklaue anzugeben, deren sichere Anbringung an einer rechteckigen Gleitschiene für den Benutzer einfach erkennbar ist. Die Erfindung löst diese Aufgabe durch eine Spannklaue mit den Merkmalen des Anspruchs 1. Vorteilhafte Weiterbildungen sind in den Unteransprüchen angegeben.
Die Erfindung sieht vor, dass die Welle einen um die erste Drehachse schwenkbaren Exzenter hat und das Anlageelement um eine zu dem Exzenter ortsfeste zweite Drehachse, die parallel zu der ersten Drehachse ausgerichtet ist, schwenkbar gelagert ist. Ferner wird das Anlageelement bei der Schwenkbewegung des Betätigungsorgans in einer Anschwenkbewegung von einer Initialstellung in eine Anlagestellung derart an die Gleitschiene angeschwenkt, dass die Klemmstruktur in der Anlagestellung in dem verriegelten Zustand ist. Weiterhin ist eine Sperranordnung vorgesehen, die die Schwenkbewegung des Betätigungsorgans in einer Zwischenstellung zwischen der Ausgangsstellung und der Sicherungsstellung blockiert, wenn die Anschwenkbewegung des Anlageelements in einer Zwischenstellung zwischen dessen Initialstellung und dessen Anlagestellung blockiert ist. Durch die Blockade des Betätigungsorgans wird einem das Betätigungsorgan verschwenkender Benutzer signalisiert, dass die Spannklaue nicht sicher an der Gleitschiene befestigt ist. Dadurch kann eine Fehlbedienung weitgehend ausgeschlossen werden. Ferner können durch den einfachen Aufbau der Spannklaue im Unterschied zu komplexer aufgebauten Spannklauen wesentlich stabilere Bauteile verwendet werden, so dass auch schweres Zubehör an der Spannklaue befestigt werden kann.

Wenn die Anschwenkbewegung des Anlageelements in der Zwischenstellung, also vor Erreichen der Anlagestellung, blockiert ist, kann dieses nicht weiter in die Anlagestellung verschwenkt werden. Eine andersartige Bewegung des Anlageelements, durch die dieses nicht in die Anlagestellung verschwenkt wird, ist nicht notwendigerweise blockiert. Bei derart blockiertem Anlageelement wird die Schwenkbewegung des Betätigungsorgans blockiert, wodurch das Betätigungsorgan nicht weiter in die Sicherungsstellung verschwenkt werden kann. Vorzugsweise ist ein Verschwenken des Betätigungsorgans in die zu der blockierten Schwenkbewegung entgegengesetzte Schwenkrichtung weiterhin freigegeben. Ferner ist das Betätigungsorgan vorzugsweise stoffschlüssig mit der Welle verbunden. Alternativ dazu sind an dem Betätigungsorgan und der Welle jeweils eine Kronenverzahnung, eine Kerbverzahnung oder anderweitige polygone oder mehrflächige Konturen ausgebildet, die miteinander in Eingriff stehen. In diesem Fall können das Betätigungsorgan und die Welle über eine Schraube verbunden werden.

Ferner ist es vorteilhaft, wenn an dem Anlageelement eine erste Anlagefläche und eine zweite Anlagefläche ausgebildet sind, von denen in dem verriegelten Zustand der Klemmstruktur die erste Anlagefläche an einer dem Operationstisch zugewandten ersten Schienenfläche der Gleitschiene und die zweite Anlagefläche an einer zweiten Schienenfläche der Gleitschiene anliegt. Dadurch wird eine sichere Befestigung der Spannklaue an der Gleitschiene in dem verriegelten Zustand der Klemmstruktur erreicht. Vorzugsweise liegt der Grundkörper darüber hinaus an der ersten Schienenfläche der Gleitschiene und an einer der zweiten Schienenfläche der Gleitschiene entgegengesetzten dritten Schienenfläche der Gleitschiene an. Dadurch kann die Sicherheit vor einem ungewollten Lösen der Spannklaue von der Gleitschiene weiter erhöht werden.

Vorzugsweise ist der Exzenter zylinderförmig ausgebildet, und die Längsachse des Exzenters bildet die zweite Drehachse. Dadurch wird ein einfacher und stabiler Aufbau der Spannklaue erreicht.

In einer weiteren vorteilhaften Ausgestaltung weist die Sperranordnung ein Anschlagelement und eine Anschlagfläche auf. Das Anschlagelement schlägt bei der blockierten Anschwenkbewegung des Anlageelements derart an die Anschlagfläche an, dass eine durch die Schwenkbewegung des Betätigungsorgans verursachte Schwenkbewegung des Exzenters blockiert ist. Durch den über die Welle mit dem Betätigungsorgan drehfest verbundenen Exzenter wird daher die Schwenkbewegung des Betätigungsorgans einfach und sicher blockiert.

Ferner ist es vorteilhaft, wenn die Anschlagfläche an dem Anlageelement ausgebildet und das Anschlagelement mit dem Grundkörper fest verbunden ist. Dadurch wird erreicht, dass das Anschlagelement nur bei einer Blockade der Anschwenkbewegung des Anlageelements an der Anschlagfläche anschlägt. Wenn die Anschwenkbewegung des Anlageelements blockiert ist, ist es möglich, dass das Anlageelement eine durch die Schwenkbewegung des Exzenters verursachte Ausgleichsbewegung ausführt. Durch den Anschlag des Anschlagelements an die Anschlagfläche wird die Ausgleichsbewegung des Anlageelements derart eingeschränkt oder verhindert, dass die Schwenkbewegung des Exzenters blockiert ist.

Vorzugsweise ist das Anschlagelement ein Stift und die Anschlagfläche in einer Nut ausgebildet. Dadurch wird erreicht, dass die Sperranordnung einfach und stabil ausgebildet ist.

In einer weiteren vorteilhaften Ausgestaltung sind die Anschlagfläche der Nut und der Stift parallel zu der zweiten Drehachse ausgerichtet. Dadurch wird eine schwenkende Bewegung des Anlageelements ermöglicht, wohingegen eine das Anlageelement verschiebende Bewegung auf einfache Weise verhindert wird.

In einer bevorzugten Ausführungsform ist die Breite der Nut größer als der Durchmesser des Stifts. Dadurch wird eine feste Anlage der Anlageflächen des Anlageelements an der Gleitschiene unabhängig von deren konkreten Abmessungen erreicht. Durch die breiter als der Durchmesser des Stifts ausgebildete Nut hat das Anlageelement einen Bewegungsfreiraum, durch den sichergestellt ist, dass alle Anlageflächen des Anlageelements an der Gleitschiene fest anliegen.

In einer weiteren vorteilhaften Ausgestaltung umfasst die Klemmstruktur ein weiteres Anlageelement, das an der Welle um die erste Drehachse schwenkbar gelagert ist und mindestens eine Anlagefläche hat, die in dem verriegelten Zustand der Klemmstruktur an der Gleitschiene anliegt. Dadurch wird die Festigkeit, mit der die Spannklaue an der Gleitschiene anliegt, erhöht. Durch die schwenkbare Lagerung des weiteren Anlageelements können die Anlageflächen beim Anlegen der Spannklaue an die Gleitschiene präzise an der Gleitschiene ausgerichtet werden.

Vorzugsweise hat der Exzenter einen ersten Exzenterabschnitt und einen zweiten Exzenterabschnitt. Ferner hat das Anlageelement einen ersten Schenkel und einen zweiten Schenkel, von denen der erste Schenkel an dem ersten Exzenterabschnitt und der zweite Schenkel an dem zweiten Exzenterabschnitt jeweils um die zweite Drehachse drehbar gelagert sind. Weiterhin ist das weitere Anlageelement zwischen den Schenkeln des Anlageelements angeordnet. Dadurch ist die Spannklaue besonders stabil gegenüber äußeren Drehmomenten, die z.B. durch das Zubehör auf die Spannklaue ausgeübt werden. Beispielsweise kann an der Spannklaue befestigtes schweres Zubehör an einem parallel zur ersten Drehachse der Spannklaue ausgerichteten Hebelarm befestigt sein. Das dadurch auf die Spannklaue ausgeübte Drehmoment kann durch den Schenkel des Anlageelements, der von dem Zubehör abgewandt ist, besonders effektiv und materialschonend auf die Gleitschiene übertragen werden, da dieser Schenkel von einer relativ kleinen Kraft beaufschlagt wird.

In einer vorteilhaften Ausgestaltung umfasst die Welle ein erstes Wellenelement, ein zweites Wellenelement und ein Verbindungselement. Der erste Exzenterabschnitt ist an dem ersten Wellenelement und der zweite Exzenterabschnitt an dem zweiten Wellenelement ausgebildet. Ferner weist das Verbindungselement ein Durchgangsloch auf, in das das erste Wellenelement und das zweite Wellenelement hineinragen. Das erste Wellenelement ist mit dem zweiten Wellenelement um die erste Drehachse drehfest verbindbar. Weiterhin ist das Verbindungselement an dem Grundkörper um die erste Drehachse drehbar gelagert und das zweite Anlageelement an dem Verbindungselement um die erste Drehachse schwenkbar gelagert. Durch diesen Aufbau kann die Spannklaue einfach montiert werden, ohne die Stabilität unnötig herabzusetzen. Für die Montage werden zunächst das Verbindungselement, das weitere Anlageelement und der Schwenkriegel in der Spannklaue angeordnet und anschließend die beiden Wellenelemente von entgegengesetzten Seiten durch die Schenkel des Schwenkriegels und das Durchgangsloch des Verbindungselements geführt.

Weiterhin ist es vorteilhaft, wenn der erste Schenkel oder der zweite Schenkel einen Vorsprung hat, wobei zwischen dem Vorsprung und dem Grundkörper eine Schraubendruckfeder und/oder eine Schenkelfeder angeordnet ist, die eine der Anschlagfläche gegenüberliegende weitere Anschlagfläche der Nut gegen den Stift drückt. Dadurch wird eine zuverlässige Führung des Anlageelements beim Anschwenken an die Gleitschiene erreicht.

Ferner ist es vorteilhaft, wenn die mindestens eine Anlagefläche des weiteren Anlageelements eine an einer zur Anlage an der Gleitschiene vorgesehenen Seite des weiteren Anlageelements ausgebildete erste Anlagefläche und eine zweite Anlagefläche umfasst, wobei die Anlageflächen des weiteren Anlageelements an zwei entgegengesetzten Bereichen der Seite ausgebildet sind. Dadurch wird die Stabilität der an die Gleitschiene angelegten Spannklaue in dem verriegelten Zustand erhöht. Des Weiteren ist diese Ausführung des Anlageelements besonders vorteilhaft, wenn die Gleitschiene ein Hohlprofil aufweist, da dieses nur im Kantenbereich eine ausreichende Druckstabilität aufweist. Ein weiterer Vorteil ergibt sich aus dieser Anordnung der Anlageflächen, wenn die Gleitschiene an den Operationstisch geschraubt ist und die Spannklaue im Bereich einer Befestigungsschraube angebracht werden soll, da die Anlageflächen nicht in einem mittleren Bereich der Gleitschienenoberfläche anliegen, in der sich in der Regel die versenkt angeordnete Befestigungsschraube befindet.

In einer weiteren vorteilhaften Ausgestaltung sind an einer weiteren Seite des weiteren Anlageelements zwei weitere Kontaktflächen ausgebildet. Ferner ist das zweite Anlageelement aus dem Grundkörper herausnehmbar und derart wieder in den Grundkörper einsetzbar, dass die zwei weiteren Kontaktflächen in dem verriegelten Zustand der Klemmstruktur an der Gleitschiene anliegen. Dadurch ist die Spannklaue vielseitig für Gleitschienen mit verschiedenen Abmessungen einsetzbar, indem das weitere Anlageelement derart in den Grundkörper eingesetzt wird, dass die für die entsprechende Gleitschiene am besten geeignete Seite des weiteren Anlageelements die Gleitschiene in dem verriegelten Zustand kontaktiert.

In einer weiteren vorteilhaften Ausführungsform ist an dem Grundkörper eine Verzahnung ausgebildet. Ferner ist das Betätigungsorgan ein Schwenkhebel, der einen Rastschuh mit mindestens einer Klinke aufweist. Dabei ist die Rastklinke bei der Schwenkbewegung des Betätigungsorgans von dessen Ausgangsstellung in dessen Sicherungsstellung mit der Verzahnung in Eingriff bringbar. Durch die sich in der Sicherungsstellung in Eingriff befindenden Rastklinken ist die Sicherungsstellung für den Benutzer einfach von der Zwischenstellung des Betätigungsorgans abgrenzbar. Ferner kann die Spannklaue dauerhaft sicher an der Gleitschiene befestigt werden.

Weitere Merkmale und Vorteile der Erfindung ergeben sich aus der nachfolgenden Beschreibung, die die Erfindung anhand von Ausführungsbeispielen in Zusammenhang mit den beigefügten Figuren näher erläutert. Es zeigen:
- Figur 1: eine Seitenansicht einer nicht erfindungsgemäßen Spannklaue, die fehlerhaft an einer Gleitschiene angebracht ist;
- Figur 2: eine perspektivische Ansicht einer an einer Gleitschiene angebrachten erfindungsgemäßen Spannklaue;
- Figur 3: eine perspektivische Ansicht der Spannklaue;
- Figur 4: eine perspektivische Ansicht einer Klemmstruktur der Spannklaue;
- Figur 5: eine perspektivische Ansicht eines Grundkörpers der Spannklaue;
- Figur 6: eine Explosionsdarstellung des Grundkörpers und von Elementen der Klemmstruktur der Spannklaue;
- Figur 7: eine weitere teilweise auseinandergezogene Darstellung von Elementen der Klemmstruktur;
- Figur 8: eine perspektivische Ansicht des Grundkörpers und eines Elements der Klemmstruktur;
- Figur 9: eine Vorderansicht des Grundkörpers und von Elementen der Klemmstruktur;
- Figur 10: eine Seitenansicht einer Exzenterwelle der Klemmstruktur;
- Figur 11: einen Schnitt durch die Exzenterwelle entlang einer in Figur 10 gezeigten Schnittlinie;
- Figur 12: eine weitere Seitenansicht der Exzenterwelle;
- Figur 13: einen Schnitt durch die Exzenterwelle entlang einer in Figur 12 eingezeichneten Schnittlinie;
- Figur 14: einen Querschnitt durch die an die Gleitschiene angelegte Spannklaue in einem geöffneten Zustand der Klemmstruktur;
- Figur 15: einen weiteren Querschnitt durch die an die Gleitschiene angelegte Spannklaue in einem verriegelten Zustand der Klemmstruktur;
- Figur 16: einen Querschnitt durch die an die Gleitschiene angelegte Spannklaue in einem geöffneten Zustand der Klemmstruktur;
- Figur 17: einen weiteren Querschnitt durch die an die Gleitschiene angelegte Spannklaue in dem verriegelten Zustand der Klemmstruktur;
- Figur 18: einen Querschnitt durch die an die Gleitschiene angelegte Spannklaue in einem Zwischenzustand zwischen dem geöffneten und dem verriegelten Zustand der Klemmstruktur;
- Figur 19: einen Querschnitt durch die an die Gleitschiene angelegte Spannklaue in einem weiteren Zwischenzustand zwischen dem geöffneten und dem verriegelten Zustand der Klemmstruktur;
- Figur 20: einen Querschnitt durch die an die Gleitschiene angelegte Spannklaue in einem weiteren Zwischenzustand zwischen dem geöffneten und dem verriegelten Zustand der Klemmstruktur;
- Figur 21: einen Querschnitt der an eine größere Gleitschiene angelegten Spannklaue in einem Zwischenzustand zwischen dem geöffneten und dem verriegelten Zustand der Klemmstruktur; und
- Figur 22: einen Querschnitt durch die an die weitere Gleitschiene angelegte Spannklaue in einem Zustand der Klemmstruktur, in dem ein Betätigungshebel der Spannklaue blockiert ist.

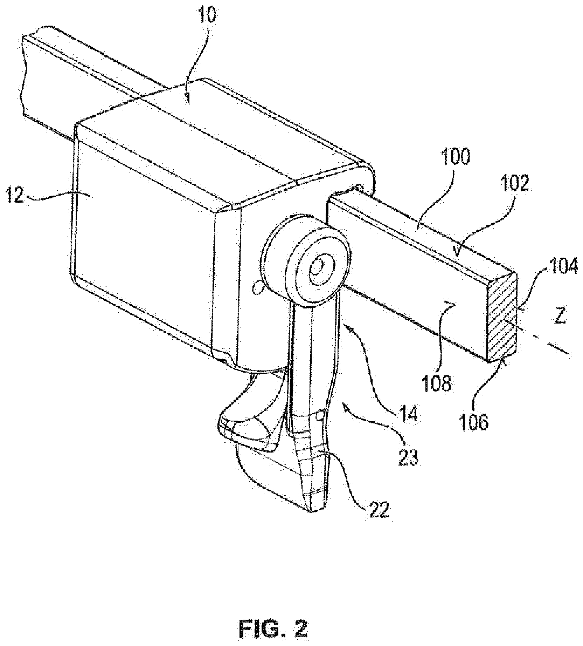

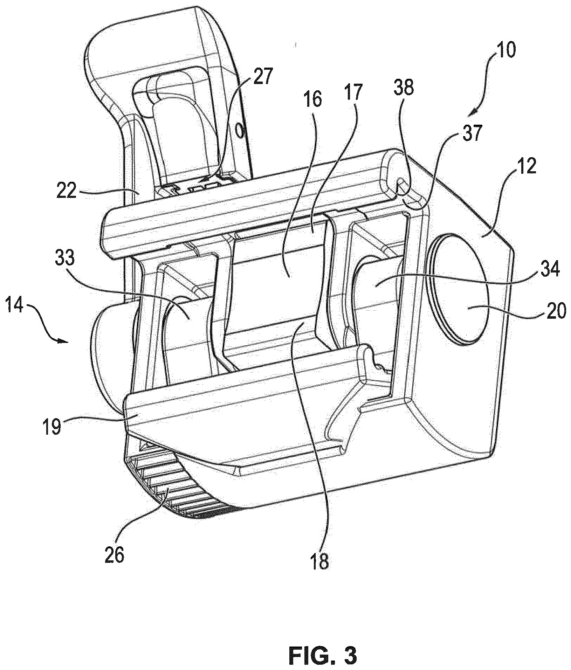

Die Figuren 2 und 3 zeigen jeweils eine perspektivische Ansicht einer erfindungsgemäßen Spannklaue 10, die in Figur 2 an einer Gleitschiene 100 angebracht und in Figur 3 ohne die Gleitschiene 100 gezeigt ist. Die Gleitschiene 100 hat einen rechteckigen Querschnitt und wird von der Spannklaue 10 quer zu der Längsachse Z der Gleitschiene 100 umgriffen. Dabei wird die Gleitschiene 100 von der Spannklaue 10 jeweils an ihrer oberen Schienenfläche 102, an ihrer einem nicht dargestellten Operationstisch zugewandten inneren Schienenfläche 104, an ihrer unteren Schienenfläche 106 und an ihrer äußeren Schienenfläche 108 kontaktiert und so eingeklemmt, dass die Spannklaue 10 fest an der Gleitschiene 100 angebracht ist.

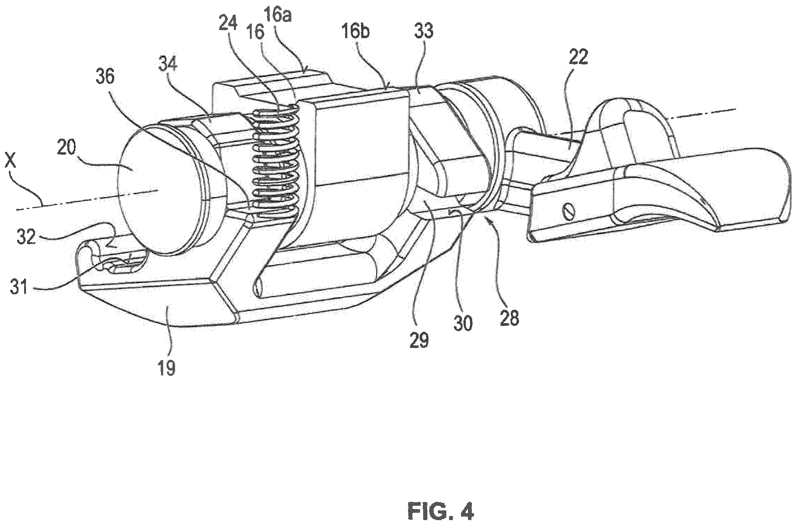

Die Spannklaue 10 hat einen Grundkörper 12 und eine allgemein mit 14 bezeichnete Klemmstruktur, die in Figur 4 in einer perspektivischen Ansicht unter Ausblendung des Grundkörpers 12 dargestellt ist. Der in Figur 3 gezeigte Grundkörper 12 ist im Wesentlichen hakenförmig ausgebildet und weist eine erste Anlagefläche 37 und eine zweite Anlagefläche 38 auf, die bei an die Gleitschiene 100 angelegter Spannklaue 10 jeweils an der oberen Schienenfläche 102 bzw. an der inneren Schienenfläche 104 der Gleitschiene 100 anliegen.

Die in Figur 4 gezeigte Klemmstruktur 14 der Spannklaue 10 umfasst einen Schwenkriegel 19, der ein erstes Anlageelement zur Anlage an der Gleitschiene 100 bildet, ein Druckstück 16, das ein zweites Anlageelement zur Anlage an der Gleitschiene 100 bildet, eine um eine Drehachse X drehbare Exzenterwelle 20, einen Betätigungshebel 22, eine Schraubendruckfeder 24, ein in Figur 3 gezeigtes Rastgesperre, das eine an dem Grundkörper 12 ausgebildete Verzahnung 26 und eine Sperrvorrichtung 27 umfasst, und eine Sperranordnung 28, von der in Figur 4 eine in dem Schwenkriegel 19 ausgebildete Nut 29 mit einer ersten Anschlagfläche 30 gezeigt ist.
Der Schwenkriegel 19 hat eine erste Anlagefläche 31 und eine zweite Anlagefläche 32, die in einem in Figur 2 gezeigten verriegelten Zustand der Klemmstruktur 14 an der Gleitschiene 100 anliegen. Ferner liegen in dem verriegelten Zustand der Klemmstruktur 14 zwei in Figur 3 gezeigte Anlageflächen des Druckstücks 16 an der Gleitschiene 100 an, von denen eine erste der Anlageflächen mit 17 und eine zweite der Anlageflächen mit 18 bezeichnet ist. Der Betätigungshebel 22 befindet sich in dem verriegelten Zustand der Klemmstruktur 14 in einer Sicherungsstellung 23.

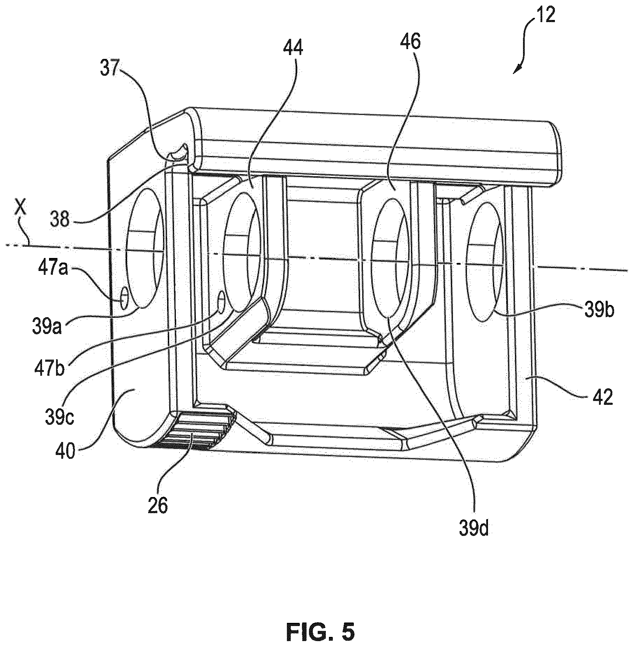

Wie in Figur 4 gezeigt, hat der Schwenkriegel 19 einen ersten Schenkel 33, in dem die Nut 29 ausgebildet ist, und einen zweiten Schenkel 34 mit einem Vorsprung 36, der über die Schraubendruckfeder 24 federnd mit dem Grundkörper 12 verbunden ist. Das zwischen den Schenkeln angeordnete Druckstück 16 hat eine erste Kontaktfläche 16a und eine zweite Kontaktfläche 16b, die in einem Abstand zur in Figur 3 oberen Seite des Grundkörpers 12 angeordnet sind. Der Grundkörper 12 ist in der perspektivischen Ansicht nach Figur 5 in Alleinstellung dargestellt.

Der Grundkörper 12 hat vier jeweils konzentrisch um die Drehachse X ausgebildete Öffnungen, von denen eine erste Öffnung 39a in einer ersten Seitenwand 40 des Grundkörpers 12, eine zweite Öffnung 39b in einer der ersten Seitenwand 40 gegenüberliegenden zweiten Seitenwand 42 des Grundkörpers 12, eine dritte Öffnung 39c in einer zwischen der ersten Seitenwand 40 und der zweiten Seitenwand 42 angeordneten ersten Stützwand 44 und eine vierte Öffnung 39d in einer zwischen der ersten Stützwand 44 und der zweiten Seitenwand 42 angeordneten zweiten Stützwand 46 ausgebildet ist.

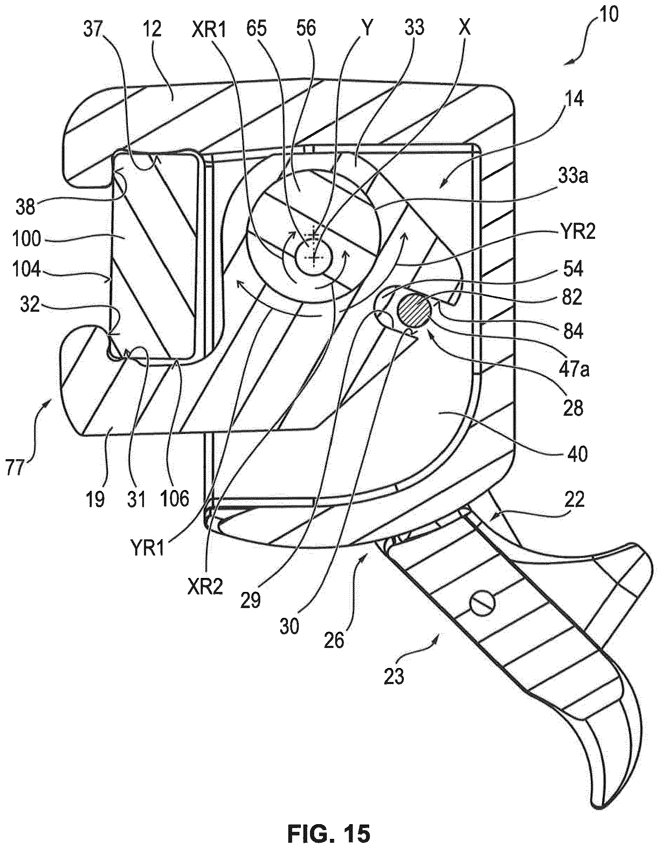

Die erste Stützwand 44 und die erste Seitenwand 40 haben zudem jeweils eine mit 47a bzw. 47b bezeichnete Durchgangsbohrung, die koaxial zu einer zur Drehachse X parallelen Achse ausgebildet sind. Durch die Durchgangsbohrungen 47a und 47b ist ein in Figur 15 mit 82 bezeichneter Stift der Sperranordnung 28 geführt und mit dem Grundkörper 12 fest verbunden.

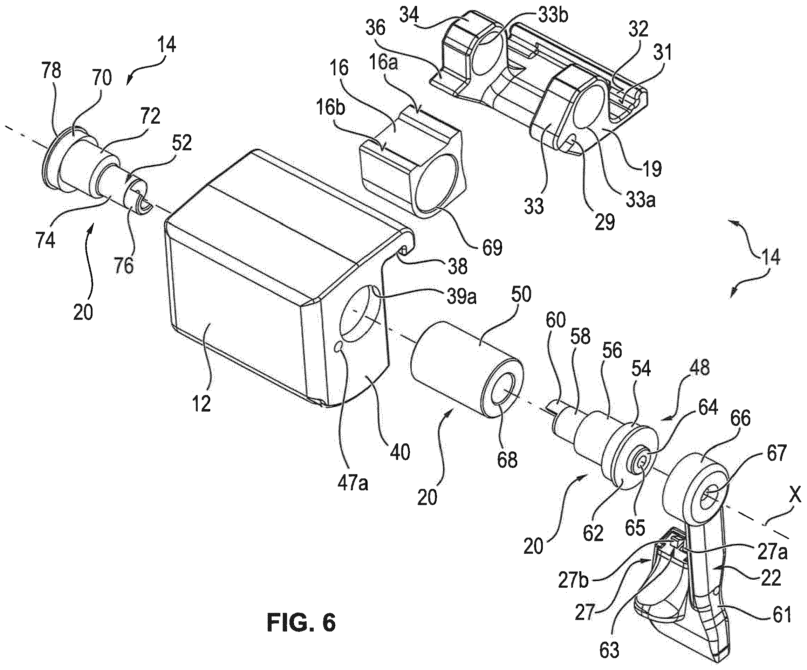

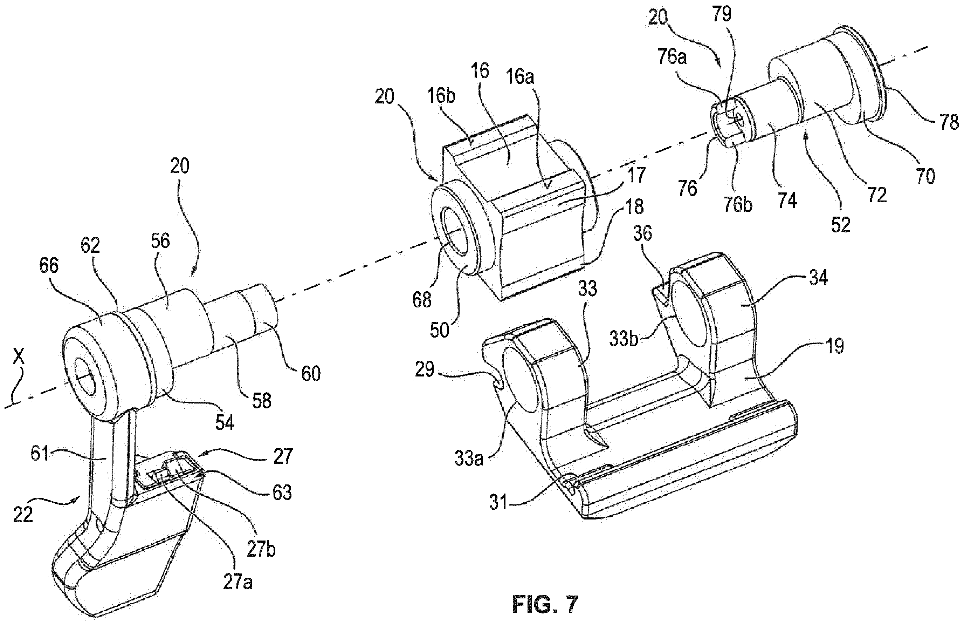

Die in Figur 3 gezeigte Anordnung aus Klemmstruktur 14 und Grundkörper 12 wird im Folgenden insbesondere anhand der Figuren 6 bis 9 näher erläutert. Figur 6 zeigt eine Explosionsdarstellung des Grundkörpers 12 und von Elementen der Klemmstruktur 14, die in Figur 7 in einer weiteren Explosionsdarstellung gruppenweise separiert ohne Grundkörper 12 dargestellt sind.

Wie in Figur 6 gezeigt, haben die Schenkel 33 und 34 des Schwenkriegels 19 jeweils eine konzentrisch um eine gemeinsame Achse ausgebildete Öffnung, von denen die des ersten Schenkels 33 mit 33a und die des zweiten Schenkels 34 mit 33b bezeichnet ist.

Ferner umfasst die in Figur 6 in Einzelteilen gezeigte Exzenterwelle 20 der Klemmstruktur 14 ein erstes Wellenelement 48, eine Wellenhülse 50 und ein zweites Wellenelement 52, die jeweils um die Drehachse X drehbar angeordnet sind.

Das erste Wellenelement 48 hat einen ersten Wellenabschnitt 54, einen zu der ersten Drehachse X exzentrisch angeordneten Exzenter 56, einen zweiten Wellenabschnitt 58, ein Wellenverbindungselement 60, eine Anschlagscheibe 62 und einen Lagerzapfen 64. Das Wellenverbindungselement 60 halbzylinderförmig ausgebildet. Die Wellenabschnitte 54, 58, die Anschlagscheibe 62 und der Lagerzapfen 64 jeweils konzentrisch um die Drehachse X angeordnet und zylindrisch ausgebildet.

Der in Figur 6 von der Anschlagscheibe 62 und dem Lagerzapfen 64 getrennt dargestellte Betätigungshebel 22 hat einen Verbindungskopf 66 und einen Hebelarm 61, an dem die Sperrvorrichtung 27 angebracht ist. Die Sperrvorrichtung 27 umfasst einen Rastschuh 63 mit zwei Klinken 27a und 27b, die mit der Verzahnung 26 des Grundkörpers 12 in Eingriff gebracht werden können, so dass der Betätigungshebel 22 an dem Grundkörper 12 arretiert ist.

Der Verbindungskopf 66 des Betätigungshebels 22 ist mit der Anschlagscheibe 62 und dem Lagerzapfen 64, wie in Figur 7 gezeigt, stoffschlüssig verbunden, so dass der Betätigungshebel 66 drehfest mit dem ersten Wellenelement 48 gekoppelt ist. Ferner haben der Verbindungskopf 66 und das erste Wellenelement 48 jeweils eine längs der ersten Drehachse X ausgebildete Durchgangsbohrung, von denen in Figur 6 die des ersten Wellenelements 48 mit 65 und die des Verbindungskopfes 66 mit 67 bezeichnet ist.

Die in Figur 6 neben dem ersten Wellenelement 48 dargestellte Wellenhülse 50 ist zylinderförmig ausgebildet, hat ein konzentrisch dazu angeordnetes Durchgangsloch 68 und ist durch ein in dem Druckstück 16 ausgebildetes Durchgangsloch 69 geführt, wie in Figur 7 gezeigt ist. Das Druckstück 16 ist an der Wellenhülse 50 um die Drehachse X drehbar gelagert.

Das zweite Wellenelement 52 hat einen ersten Wellenabschnitt 70, einen exzentrisch zu der Drehachse X ausgebildeten Exzenter 72, einen zweiten Wellenabschnitt 74, ein Wellenverbindungselement 76 und eine Anschlagscheibe 78, von denen die Anschlagscheibe 78, und die Wellenabschnitte 70 und 74 jeweils konzentrisch um die Drehachse X ausgebildet sind. Das an den Wellenabschnitt 74 des zweiten Wellenelements 52 anschließende Wellenverbindungselement 76 ist halbzylinderförmig ausgebildet und hat jeweils zwei Anlageflächen, von denen in Figur 7 eine erste Anlagefläche mit 76a und eine zweite Anlagefläche mit 76b bezeichnet sind. Ferner hat das zweite Wellenelement 52 eine längs der ersten Drehachse X ausgebildete Sacklochbohrung 79 mit einem Innengewinde.

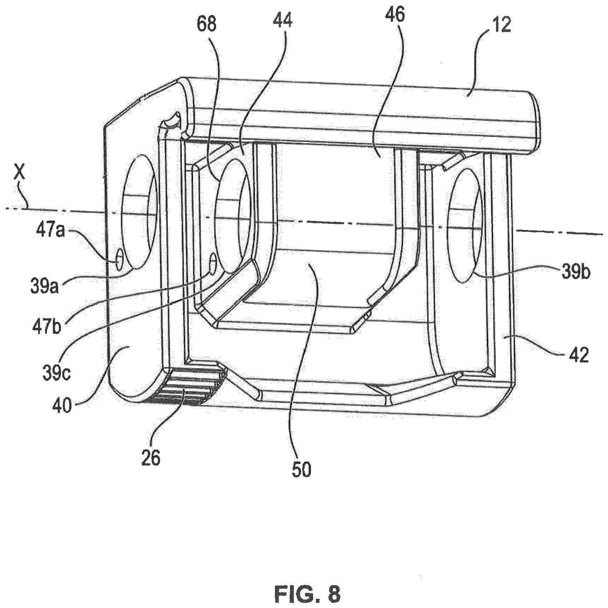

Figur 8 zeigt eine perspektivische Ansicht der an dem Grundkörper 12 angeordneten Wellenhülse 50 unter Ausblendung der weiteren Elemente der Klemmstruktur 14. Die Wellenhülse 50 ist durch die dritte Öffnung 39c der ersten Stützwand 44 und die vierte Öffnung 39d der Stützwand 46 geführt und an dem Grundkörper 12 um die Drehachse X drehbar gelagert.

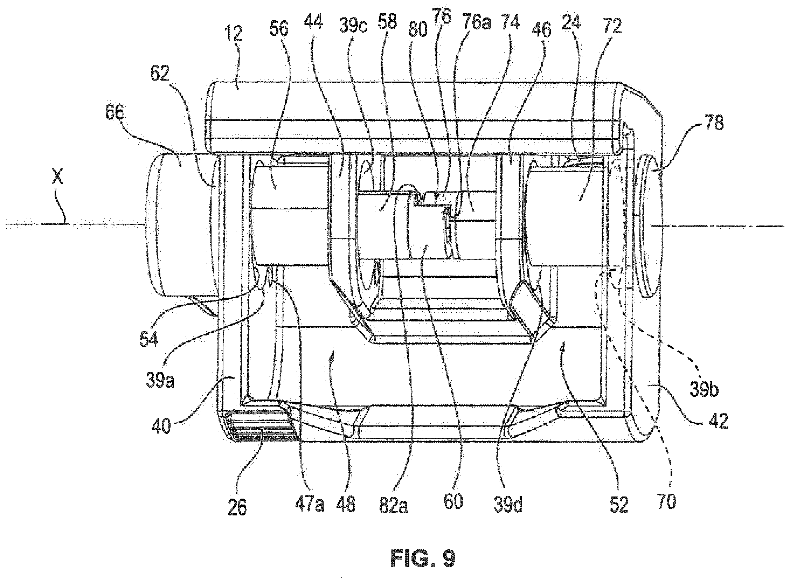

In Figur 9 sind der Grundkörper 12, das mit dem Betätigungshebel 22 verbundene erste Wellenelement 48 und das zweite Wellenelement 52 in einer Vorderansicht gezeigt. Das erste Wellenelement 48 ist durch die Öffnung 39a der ersten Seitenwand 40 des Grundkörpers 12 geführt und über den ersten Wellenabschnitt 54 an dem Grundkörper 12 um die Drehachse X drehbar gelagert. Die zum ersten Wellenabschnitt 54 koaxial angeordnete Anschlagscheibe 62 liegt an ihrem über den ersten Wellenabschnitt 54 überstehenden Bereich an einer Außenfläche der ersten Seitenwand 40 an.

Zwischen der ersten Seitenwand 40 und der ersten Stützwand 44 ist der Exzenter 56 angeordnet. Der an den Exzenter 56 anschließende zweite Wellenabschnitt 58 ist durch die dritte Öffnung 39c hindurchgeführt und ragt zusammen mit dem Wellenverbindungselement 60 in den Zwischenraum zwischen den Stützwänden 44 und 46. Das Wellenverbindungselement 60 und der in diesen Zwischenraum ragende Bereich des zweiten Wellenabschnitts 58 sind in dem Durchgangsloch 68 der in Figur 8 gezeigten, hier aber ausgeblendeten, Wellenhülse 50 aufgenommen.

Ferner ist das zweite Wellenelement 52 durch die zweite Öffnung 39b hindurchgeführt und über den ersten Wellenabschnitt 70 an dem Grundkörper 12 um die Drehachse X drehbar gelagert. Die koaxial zum ersten Wellenabschnitt 70 angeordnete Anschlagscheibe 78 liegt an ihrem über den ersten Wellenabschnitt 70 überstehenden Bereich an der Außenseite der zweiten Seitenwand 42 an. Der auf der von der Anschlagscheibe 78 entgegengesetzten Seite des ersten Wellenabschnitts 70 angeordnete Exzenter 72 ist in den Zwischenraum zwischen der zweiten Seitenwand 42 und der zweiten Stützwand 46 eingepasst. Der an den Exzenter 72 anschließende zweite Wellenabschnitt 74 ist durch die vierte Öffnung 39d hindurchgeführt und ragt in den Zwischenraum zwischen den Stützwänden 44 und 46. Das Wellenverbindungselement 76 und der in diesen Zwischenraum ragende Bereich des zweiten Wellenabschnitts 74 sind in der Wellenhülse 50 aufgenommen.

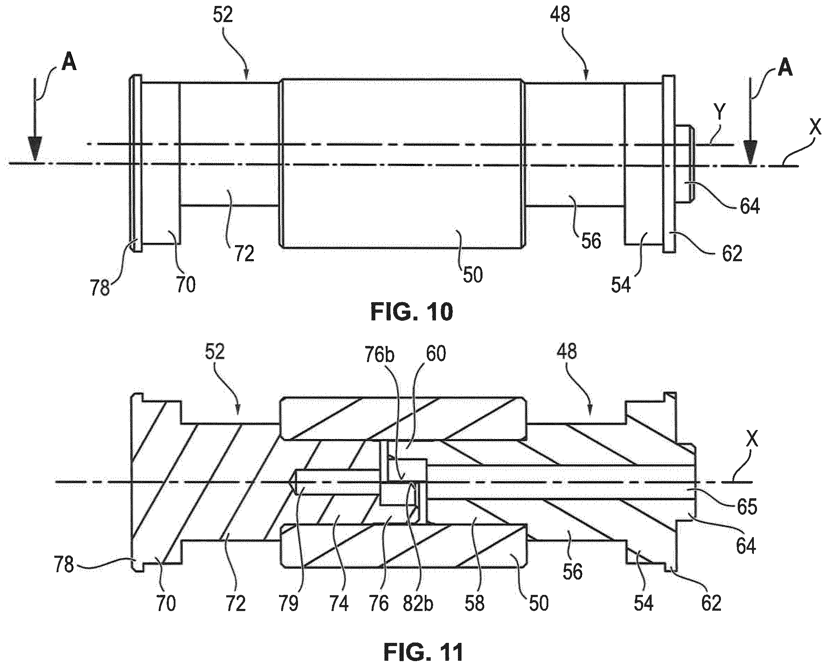

Das an den zweiten Wellenabschnitt 74 anschließende Wellenverbindungselement 76 hat einen sich in Richtung der ersten Drehachse X mit dem Wellenverbindungselement 60 überlappenden Bereich 80, in dem die erste Anlagefläche 76a an einer ersten Anlagefläche 82a des Wellenverbindungselements 60 und die zweite Anlagefläche 76b an einer zweiten Anlagefläche des Wellenverbindungselements 60, die in Figur 11 mit 82b bezeichnet ist, derart anliegen, dass die Wellenelemente 48 und 52 um die Drehachse X drehfest verbunden sind.

In Figur 10 ist eine Seitenansicht der Exzenterwelle 20 in dem verriegelten Zustand der Klemmstruktur 14 gezeigt. Die Exzenter 48 und 52 haben eine gemeinsame zur Drehachse X parallele Längsachse Y, die in der in Figur 10 gezeigten Drehposition der Exzenterwelle 20 oberhalb der Drehachse X angeordnet ist.

In Figur 11 ist ein Längsschnitt der Exzenterwelle 20 durch die in Figur 10 gezeigte Schnittlinie A-A dargestellt. In dieser Ansicht treten die aneinander anliegenden Anlageflächen 76b und 82b sowie die Durchgangsbohrung 65 und die Sacklochbohrung 79 hervor. Durch die Durchgangsbohrung 65 ist eine in Figur 11 nicht dargestellte Schraube geführt, die mit dem Innengewinde der Sacklochbohrung 79 in Gewindeeingriff steht, wodurch die Wellenelemente 48 und 52 miteinander verbunden sind. Durch die Schraubverbindung der Wellenelemente 48 und 52 werden die Exzenter 56 und 72 jeweils derart an einander entgegengesetzte Seiten der Wellenhülse 50 gedrückt, dass die Wellenelemente 48 und 52 kraftschlüssig mit der Wellenhülse 50 verbunden sind.

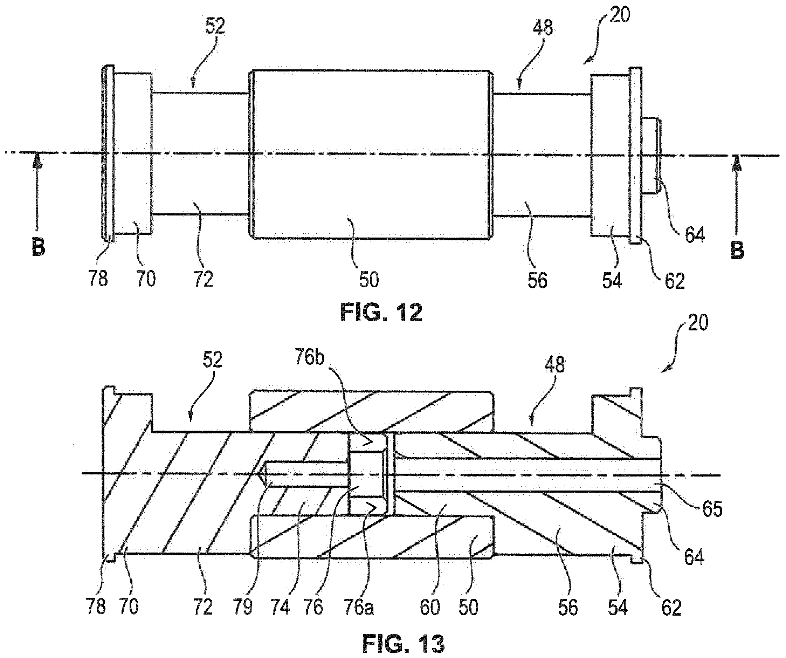

In Figur 12 ist eine weitere Seitenansicht aus der Exzenterwelle 20 in einer Stellung gezeigt, in der die Exzenterwelle 20 gegenüber der in Figur 10 gezeigten Stellung so weit gedreht wurde, dass die Anlageflächen 76a und 76b horizontal ausgerichtet sind. Die Exzenter 56 und 72 nehmen in dieser Stellung eine mittlere Position ein, in der deren Längsachse Y in Figur 12 hinter der Drehachse X liegt.

Der die Längsachse Y und die Drehachse X beinhaltende Schnitt durch die in Figur 12 eingezeichnete Schnittlinie B-B ist in Figur 13 gezeigt. Dadurch treten die gegenüber der Stellung in Figur 11 um die Drehachse X gedrehten Anlageflächen 82a und 82b hervor, die in den Figuren 12 und 13 horizontal ausgerichtet sind.

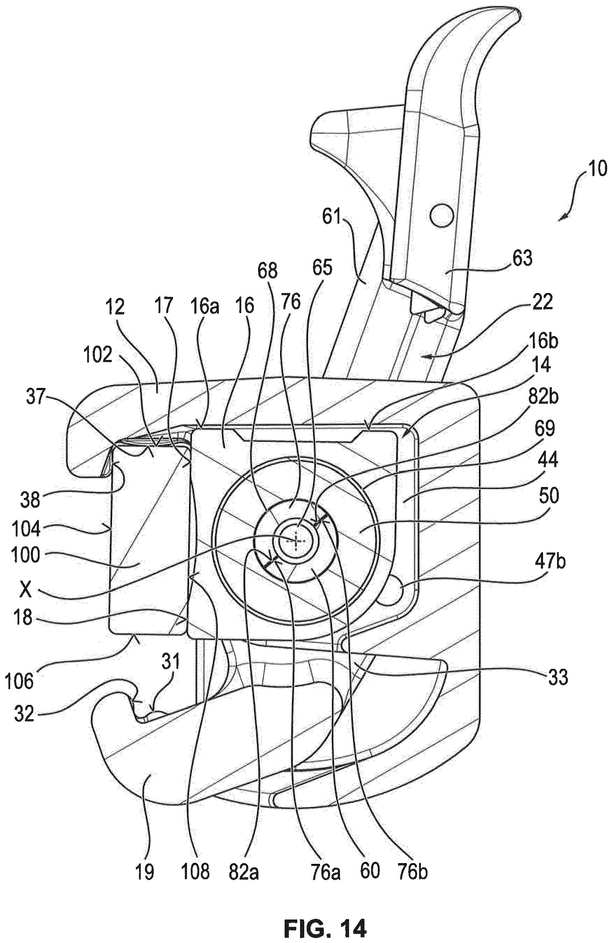

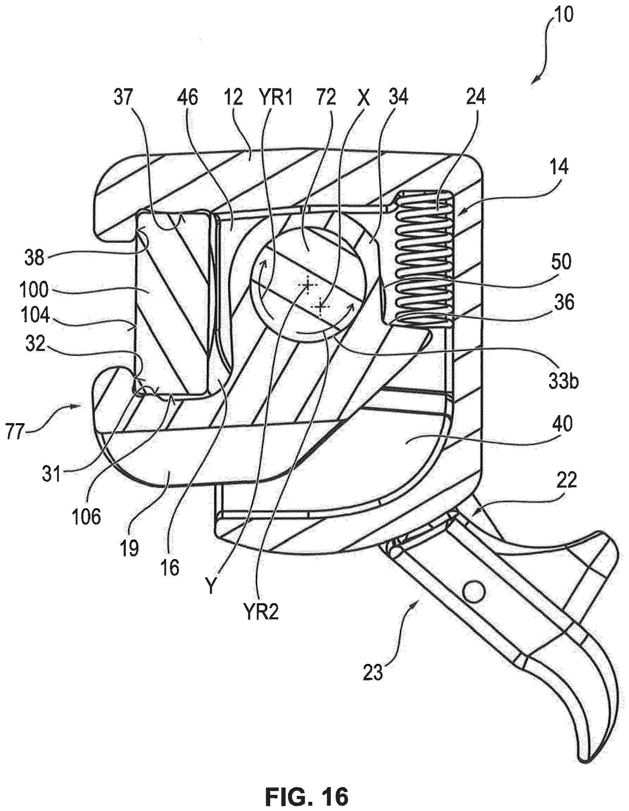

Die Figuren 14, 15 und 16 zeigen jeweils einen Querschnitt durch die an die Gleitschiene 100 angelegte Spannklaue 10, wobei der Schnitt in Figur 14 durch das Druckstück 16, in Figur 15 durch den ersten Schenkel 33 des Schwenkriegels 19 und in Figur 16 durch den zweiten Schenkel 34 des Schwenkriegels 19 verläuft.

Die Klemmstruktur 14 der gemäß Figur 14 an die Gleitschiene 100 angelegten Spannklaue 10 befindet sich in einem geöffneten Zustand, in der der Schwenkriegel 19 nicht an der Gleitschiene 100 anliegt. An der inneren Schienenfläche 104 der Gleitschiene 100 liegt die zweite Anlagefläche 38 des Grundkörpers 12, an der oberen Schienenfläche 102 liegt die erste Anlagefläche 37 des Grundkörpers 12 und an der äußeren Schienenfläche 108 liegen die erste Anlagefläche 17 und die zweite Anlagefläche 18 des Druckstücks 16 an.

In einer alternativen Einbauweise des Druckstücks 16 kann das Druckstück 16 relativ zu seiner in Figur 14 gezeigten Stellung derart um 90° um die Drehachse X gedreht in den Grundkörper 12 eingesetzt werden, dass die Kontaktflächen 16a und 16b an der äußeren Schienenfläche 108 anliegen.

Wie in den Figuren 15 und 16 gezeigt, ist der Exzenter 56 durch die Öffnung 33a des ersten Schenkels 33 des Schwenkriegels 19 und der Exzenter 72 durch die Öffnung 33b des zweiten Schenkels 34 des Schwenkriegels 19 geführt. Der Schwenkriegel 19 ist jeweils an den Exzentern 56 und 72 um deren gemeinsame Längsachse Y schwenkbar gelagert. Eine Schwenkbewegung des Schwenkriegels 19 um die Längsachse Y kann in einer ersten Schwenkrichtung YR1 und in einer der ersten Schwenkrichtung entgegengesetzten zweiten Schwenkrichtung YR2 erfolgen.

In der gezeigten Schwenkposition des Schwenkriegels 19 liegt dessen erste Anlagefläche 31 an der unteren Schienenfläche 106 und dessen zweite Anlagefläche 32 an der inneren Schienenfläche 104 der Gleitschiene 100 an, so dass sich die Klemmstruktur 14 in dem verriegelten Zustand und der Schwenkriegel 19 in einer Anlagestellung 77 befindet.

In dem verriegelten Zustand der Klemmstruktur 14 sind die Exzenter 56 und 72 jeweils so weit durch Verschwenken des Betätigungshebels 22 um die Drehachse X in einer ersten Drehrichtung XR1 verschwenkt, dass die Anlagefläche 31 des Schwenkriegels 19 gegen die untere Schienenfläche 106 und insbesondere die Anlagefläche 32 des Schwenkriegels 19 gegen die innere Schienenfläche 104 der Gleitschiene 100 drückt.

Der Schwenkriegel 19 hat durch seine schwenkbare Lagerung an den Exzentern 56 und 72 um die Längsachse Y einen weiteren Freiheitsgrad, der durch die Sperranordnung 28 eingeschränkt ist. Die Nut 29 der Sperranordnung 28 hat eine in Figur 15 gezeigte zweite Anschlagfläche 84, mit der der Stift 82 derart in Anschlag steht, dass der Schwenkriegel 19 nicht um die Längsachse Y in der ersten Schwenkrichtung YR1 verschwenkt werden kann. Die Anschlagflächen 30 und 84 sind parallel zueinander ausgerichtet und haben einen Abstand voneinander, der größer als der Durchmesser des Stifts 82 ist. Insbesondere schlägt der Stift 82 entweder an der ersten Anschlagfläche 30, an der zweiten Anschlagfläche 84 oder an keiner der Anschlagflächen 30 oder 84 an, nicht jedoch an beiden Anschlagflächen 30 und 84 gleichzeitig. Dadurch hat der Schwenkriegel 19 einen Bewegungsfreiraum, innerhalb dessen eine Schwenkbewegung des Schwenkriegels 19 um die Längsachse Y und/oder eine Bewegung des Schwenkriegels 19 zusammen mit den Exzentern 56 und 72 um die Drehachse X durch die Sperranordnung 28 freigegeben ist.

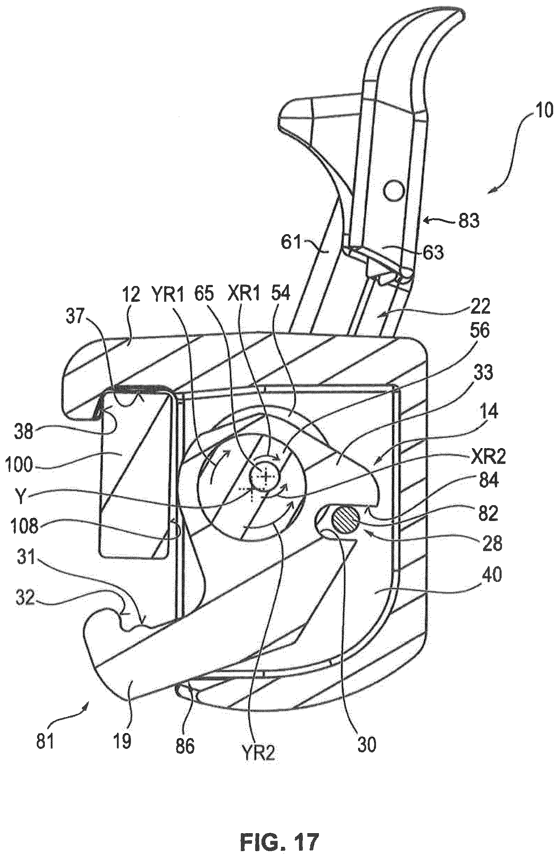

Die in Figur 16 gezeigte Schraubendruckfeder 24 übt auf den Schwenkriegel 19 ein Drehmoment aus, durch das die Anschlagfläche 84 gegen den Stift 82 und der Schwenkriegel 19 gegen die Gleitschiene 100 gedrückt wird. Es ist auch möglich, dass nur die zweite Anschlagfläche 84 gegen den Stift 82 oder nur der Schwenkriegel 19 gegen die Gleitschiene 100 gedrückt werden, wie später anhand der Figuren 17 bis 22 erläutert wird.

Durch Anschlag des Stifts 82 an der zweiten Anschlagfläche 84 oder durch Anlage der Anlagefläche 31 an der Gleitschiene 100 wird eine Drehung des Schwenkriegels 19 um die Längsachse Y in der ersten Schwenkrichtung YR1 verhindert.

Figur 17 zeigt einen Querschnitt der an die Gleitschiene 100 angelegten Spannklaue 10 durch den ersten Schenkel 33 des Schwenkriegels 19 in dem geöffneten Zustand der Klemmstruktur 14 und in einer Initialstellung 81 des Schwenkriegels 19. In dem geöffneten Zustand ist der Betätigungshebel 22 relativ zu dem in Figur 15 gezeigten verriegelten Zustand so weit um die Drehachse X in einer der ersten Drehrichtung XR1 entgegengesetzten zweiten Drehrichtung XR2 verschwenkt, dass der Schwenkriegel 19 an einem Bereich 86 des Grundkörpers 12 anschlägt, so dass er sich in einer Ausgangsstellung 83 befindet. Bei einem solchen Verschwenken des Betätigungshebels 22 aus dem verriegelten Zustand in den geöffneten Zustand der Klemmstruktur 14 wird die Längsachse Y der Exzenterwellen 56 und 72 auf einem Kreisbogen um die Drehachse X in der zweiten Drehrichtung XR2 bewegt. Die Längsachse Y ist in dem geöffneten Zustand der Klemmstruktur 14 näher an der Gleitschiene 100 als die Drehachse X und in Figur 17 tiefer als die Drehachse X positioniert, im Gegensatz zu dem verriegelten Zustand der Klemmstruktur 14, in dem die Längsachse Y höher als die Drehachse X positioniert ist. Dadurch wird der Schwenkriegel 19 bei dem Verschwenken des Betätigungshebels 22 aus dem verriegelten in den geöffneten Zustand der Klemmstruktur 14 von der Gleitschiene 100 wegbewegt, so dass die Spannklaue 10 von der Gleitschiene 100 lösbar ist.

Ferner schlägt der Stift 82 in dem geöffneten Zustand der Klemmstruktur 14 an der zweiten Anschlagfläche 84 an, wodurch ein weiteres Verschwenken der Exzenter 56 und 72 zusammen mit dem Betätigungshebel 22 um die Drehachse X in der zweiten Drehrichtung XR2 verhindert wird. Ein entsprechendes von dem Betätigungshebel 22 auf die Exzenter 56 und 72 übertragenes Drehmoment wird über den Schwenkriegel 19 vollständig auf den Stift 82 und den Grundkörper 12 in dem Bereich 86 übertragen, so dass der Schwenkriegel 19 und der Betätigungshebel 22 nicht bewegt werden.

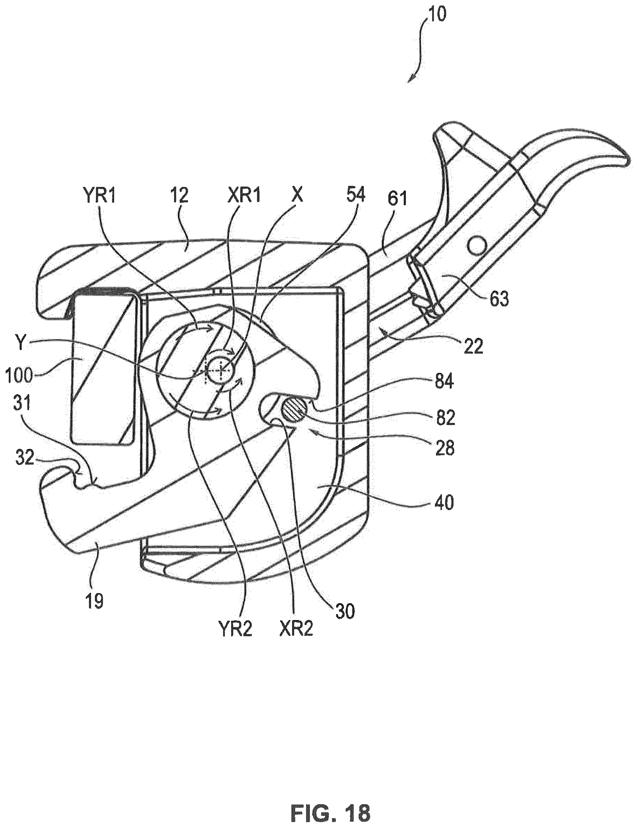

Die Figuren 18 bis 20 zeigen jeweils einen Querschnitt der Spannklaue 10 durch den ersten Schenkel 33 des Schwenkriegels 19 in unterschiedlichen Zwischenstellungen des Betätigungshebels 22, die dieser beim Übergang aus seiner Ausgangsstellung 83 in seine Sicherungsstellung 23 durchläuft.

In Figur 18 ist der Betätigungshebel 22 relativ zu seiner Stellung in Figur 17 um einen ersten Winkel um die Drehachse X in der ersten Drehrichtung XR1 verschwenkt, wodurch die Längsachse Y der Exzenter 56 und 72 um den ersten Winkel um die Drehachse X in der ersten Drehrichtung XR1 verschwenkt ist. Durch die Schwenkbewegung der Exzenter 56 und 72 werden die Anlageflächen 31 und 32 des Schwenkriegels 19 in Richtung der Gleitschiene 100 bewegt. Die zweite Anschlagfläche 84 bleibt bei der Bewegung des Schwenkriegels 19 durch die Vorspannung der Schraubendruckfeder 24 mit dem Stift 82 in Anschlag.

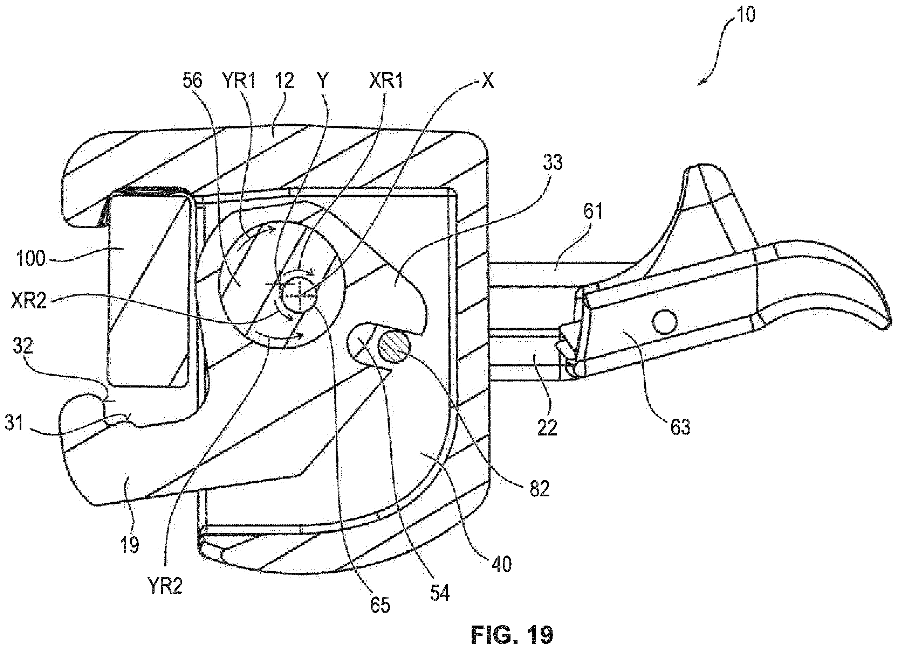

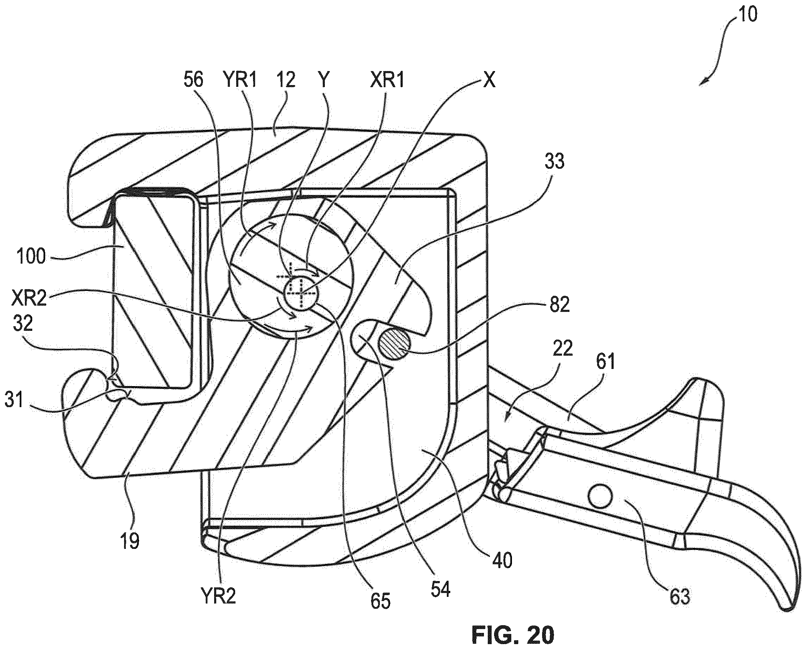

In den in den Figuren 19 und 20 eingenommenen Zwischenstellungen des Betätigungshebels 22 ist der Betätigungshebel 22 jeweils um einen zweiten bzw. einen dritten Winkel relativ zur jeweils vorhergehenden Figur in der ersten Drehrichtung XR1 zusammen mit den Exzentern 56 und 72 verschwenkt. Durch das Verschwenken der Exzenter 56 und 72 wird der Schwenkriegel 19 durch die Kraftbeaufschlagung der Schraubendruckfeder 24 derart an die Gleitschiene 100 angeschwenkt, dass die zweite Anschlagfläche 84 mit dem Stift 82 in Anschlag bleibt und die Anlageflächen 31 und 32 des Schwenkriegels 19 relativ zur jeweils in der vorhergehenden Figur gezeigten Stellung näher an die Gleitschiene 100 bewegt werden.

Durch ein weiteres Verschwenken des Betätigungshebels 22 relativ zu dessen in Figur 20 gezeigten Stellung wird die Klemmstruktur 14 in den verriegelten Zustand gebracht, der in Figur 15 gezeigt ist.

Die vorstehend beschriebene Sequenz, in der die Klemmstruktur 14 von dem geöffneten Zustand in den verriegelten Zustand gebracht wird, hängt insbesondere von den Abmessungen der Gleitschiene 100 und der korrekten Anlage des Grundkörpers 12 an der Gleitschiene 100 in dem geöffneten Zustand der Klemmstruktur 14 ab.

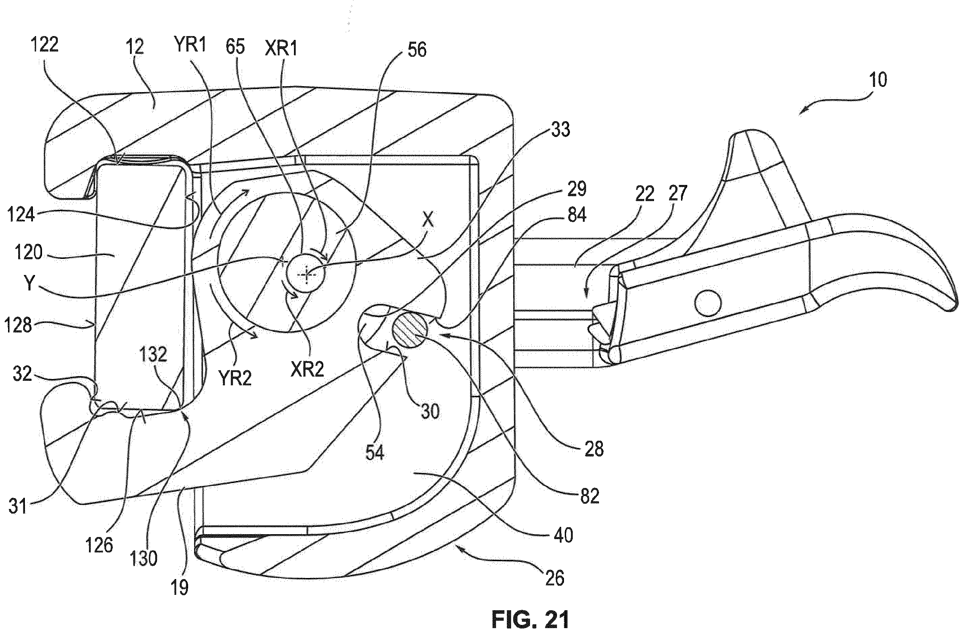

Figur 21 zeigt einen Querschnitt, der an eine rechteckige Gleitschiene 120 angelegten Spannklaue 10, deren Betätigungshebel 22 in der in Figur 19 gezeigten Stellung ist. Die Gleitschiene 120 hat eine obere Schienenfläche 122, eine innere Schienenfläche 124, eine untere Schienenfläche 126 und eine äußere Schienenfläche 128, von denen die Querschnittslängen der inneren Schienenfläche 124 und der äußeren Schienenfläche 128 jeweils größer als die Querschnittslängen der inneren Schienenfläche 104 der der äußeren Schienenfläche 108 der Gleitschiene 100 sind.

Aufgrund der größeren Abmessungen der Gleitschiene 120 stößt ein Bereich 130 des Schwenkriegels 19 an einer Kante 132 der Gleitschiene 120 an, ohne dass die Anlageflächen 31 und 32 des Schwenkriegels 19 an der Gleitschiene 120 anliegen. Da der Schwenkriegel 19 an der Gleitschiene 120 anstößt, kann der Schwenkriegel 19 nicht durch ein weiteres Verschwenken der Exzenter 56 und 72 derart weiterbewegt werden, dass die Anlageflächen 31 und 32 jeweils an der Gleitschiene 120 anliegen.

Bei einem weiteren Verschwenken des Betätigungshebels 22 in der ersten Drehrichtung XR1 um die Drehachse X werden die Exzenter 56 und 72 weiter in der ersten Drehrichtung XR1 um die Drehachse X verschwenkt. Dabei wird der Schwenkriegel 19 relativ zu den Exzentern 56 und 72 derart in der zweiten Schwenkrichtung YR2 um die Längsachse Y verschwenkt, dass die Kante der Gleitschiene 120 weiterhin in dem Bereich 130 des Schwenkriegels 19 anliegt. Der Schwenkriegel 19 behält bei dem Verschwenken der Exzenter 56 und 72 seine Ausrichtung relativ zu dem Grundkörper 12, bis auf ein kleines Verschwenken, im Wesentlichen bei, so dass er durch das Verschwenken der Exzenter 56 und 72 im Wesentlichen parallel verschoben wird. Insbesondere werden die Anschlagflächen 30 und 84 der Nut 29 zusammen mit dem Schwenkriegel 19 entlang der von der Längsachse Y ausgeführten Bewegung bewegt, die zumindest teilweise senkrecht zu den Anschlagflächen 30 und 84 verläuft. Dementsprechend wird die Längsachse Y beim weiteren Verschwenken des Betätigungshebels 22 derart bewegt, dass die erste Anschlagfläche 30 auf den Stift 82 zubewegt und die zweite Anschlagfläche 84 von dem Stift 82 wegbewegt wird.

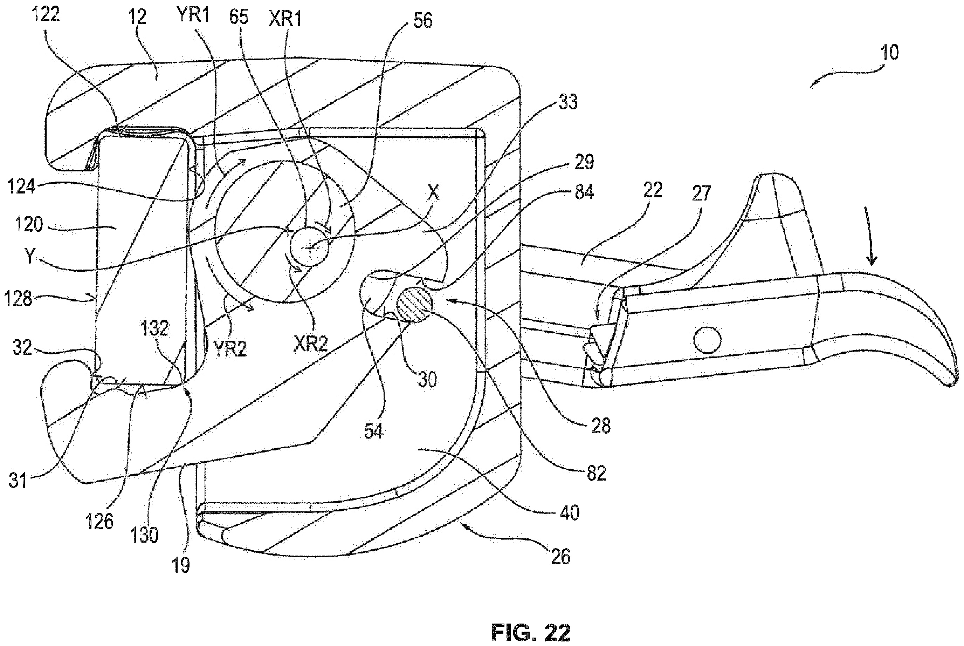

Figur 22 zeigt einen Querschnitt der an die Gleitschiene 120 angelegten Spannklaue 10 nach einem weiteren Verschwenken des Betätigungshebels 22 relativ zu der in Figur 21 eingenommenen Stellung des Betätigungshebels 22. Der Schwenkriegel 19 ist beim Verschwenken des Betätigungshebels 22 so weit zusammen mit den Exzentern 56 und 72 entlang der von der Längsachse Y ausgeführten Bewegung bewegt worden, dass die Anschlagfläche 30 an den Stift 82 anschlägt. Der fest mit dem Grundkörper 12 verbundene Stift 82 verhindert durch den Anschlag an die Anschlagfläche 30 eine weitere Schwenkbewegung der Exzenter 56 und 72 um die Drehachse X in der ersten Drehrichtung XR1, so dass der mit den Exzentern 56 und 72 drehfest verbundene Betätigungshebel 22 nicht weiter in der ersten Drehrichtung XR1 um die Drehachse X verschwenkt werden kann. Dadurch können die Klinken der Sperrvorrichtung 27 nicht mit der Kerbverzahnung 26 in Eingriff gebracht werden, so dass einem den Betätigungshebel 22 betätigenden Benutzer signalisiert wird, dass die Klemmstruktur 14 sich nicht in dem verriegelten Zustand befindet und die Spannklaue 10 nicht sicher an der Gleitschiene 120 befestigt ist.

### Bezugszeichenliste

- 10: Spannklaue
- 12: Grundkörper
- 14: Klemmstruktur
- 16: Druckstück
- 16a, 16b: Kontaktflächen
- 17, 18, 31, 32, 36, 38, 76a, 76b, 82a, 82b: Anlageflächen
- 19: Schwenkriegel
- 20: Exzenterwelle
- 22: Betätigungshebel
- 23, 77, 81, 83: Stellungen
- 24: Schraubendruckfeder
- 26: Rastgesperre
- 28: Sperranordnung
- 29: Nut
- 30, 84: Anschlagflächen
- 33, 34: Schenkel
- 33a, 33b, 39a bis 39d: Öffnungen
- 40, 42: Seitenwände
- 44, 46: Stützwände
- 47a, 47b, 65, 67: Durchgangsbohrungen
- 48, 52: Wellenelemente
- 50: Wellenhülse
- 54, 58, 70, 74: Wellenabschnitte
- 56, 72: Exzenter
- 60, 76: Wellenverbindungselement
- 61: Hebelarm
- 63: Rastschuh
- 64: Lagerzapfen
- 66: Verbindungskopf
- 68, 69: Durchgangslöcher
- 80, 86: Bereiche
- 100: Gleitschiene
- 102: obere Schienenfläche
- 104: innere Schienenfläche
- 106: untere Schienenfläche
- 108: äußere Schienenfläche
- XR1, XR2: Drehrichtungen
- YR1, YR2: Schwenkrichtungen
- X: Drehachse
- Y, Z: Längsachse

## Patentansprüche

1. Spannklaue (10) zur Anbringung an einer im Querschnitt rechteckigen Gleitschiene (100) eines Operationstisches, mit
einem Grundkörper (12) mit mindestens einer zur Anlage an der Gleitschiene (100) ausgebildeten Anlagefläche (37, 38),
einer an dem Grundkörper (12) angebrachten Klemmstruktur (14), die eine um eine erste Drehachse (X) drehbar gelagerte Welle (20) und mindestens ein Anlageelement (19) aufweist, und
einem mit der Welle (20) drehfest verbundenen Betätigungsorgan (22), das durch eine Schwenkbewegung von einer Ausgangsstellung (83) in eine Sicherungsstellung (23) bringbar ist, in der die Klemmstruktur (14) in einem verriegelten Zustand ist, in dem die Anlagefläche (37, 38) des Grundkörpers und das Anlageelement (19) der Klemmstruktur (14) an der Gleitschiene (100) anliegen, wobei
die Welle (20) einen um die erste Drehachse (X) schwenkbaren Exzenter (56, 72) hat,
das Anlageelement (19) um eine zu dem Exzenter (56, 72) ortsfeste zweite Drehachse (Y), die parallel zu der ersten Drehachse (X) ausgerichtet ist, schwenkbar gelagert ist,
das Anlageelement (19) bei der Schwenkbewegung des Betätigungsorgans (22) in einer Anschwenkbewegung von einer Initialstellung (81) in eine Anlagestellung (77) derart an die Gleitschiene (100) angeschwenkt wird, dass die Klemmstruktur (14) in der Anlagestellung (77) in dem verriegelten Zustand ist, **dadurch gekennzeichnet, dass** eine Sperranordnung (27) vorgesehen ist, die die Schwenkbewegung des Betätigungsorgans (22) in einer Zwischenstellung zwischen der Ausgangsstellung (83) und der Sicherungsstellung (23) blockiert, wenn die Anschwenkbewegung des Anlageelements (19) in einer Zwischenstellung zwischen dessen Initialstellung (81) und dessen Anlagestellung (77) blockiert ist.

2. Spannklaue (10) nach Anspruch 1, **dadurch gekennzeichnet, dass** an dem Anlageelement (19) eine erste Anlagefläche (32) und eine zweite Anlagefläche (31) ausgebildet sind, von denen in dem verriegelten Zustand der Klemmstruktur (14) die erste Anlagefläche (32) an einer dem Operationstisch zugewandten ersten Schienenfläche (104) der Gleitschiene (100) und die zweite Anlagefläche (31) an einer zweiten Schienenfläche (106) der Gleitschiene (100) anliegt.

3. Spannklaue (10) nach Anspruch 1 oder 2, **dadurch gekennzeichnet, dass** der Exzenter (56, 72) zylinderförmig ausgebildet und die Längsachse des Exzenters (56, 72) die zweite Drehachse (Y) ist.

4. Spannklaue (10) nach einem der vorhergehenden Ansprüche, **dadurch gekennzeichnet, dass** die Sperranordnung (27) ein Anschlagelement (82) und eine Anschlagfläche (30) aufweist, und
das Anschlagelement (82) bei der Blockade der Anschwenkbewegung des Anlageelements (19) derart an die Anschlagfläche (30) anschlägt, dass eine durch die Schwenkbewegung des Betätigungsorgans (22) verursachte Schwenkbewegung des Exzenters (56, 72) blockiert ist.

5. Spannklaue (10) nach Anspruch 4, **dadurch gekennzeichnet, dass** die Anschlagfläche (30) an dem Anlageelement (19) ausgebildet und das Anschlagelement (82) mit dem Grundkörper (12) fest verbunden ist.

6. Spannklaue (10) nach Anspruch 4 oder 5, **dadurch gekennzeichnet, dass** das Anschlagelement ein Stift (82) ist und die Anschlagfläche (30) in einer Nut (29) ausgebildet ist.

7. Spannklaue (10) nach Anspruch 6, **dadurch gekennzeichnet, dass** die Anschlagfläche (30) der Nut (29) und der Stift (82) parallel zu der zweiten Drehachse (Y) ausgerichtet sind.

8. Spannklaue (10) nach Anspruch 6 oder 7, **dadurch gekennzeichnet, dass** Breite der Nut (29) größer als der Durchmesser des Stifts (82) ist.

9. Spannklaue (10) nach einem der vorhergehenden Ansprüche, **dadurch gekennzeichnet, dass** die Klemmstruktur (14) ein weiteres Anlageelement (16) umfasst, das an der Welle (20) um die erste Drehachse (X) schwenkbar gelagert ist und mindestens eine Anlagefläche (17, 18) hat, die in dem verriegelten Zustand der Klemmstruktur (14) an der Gleitschiene (100) anliegt.

10. Spannklaue (10) nach Anspruch 9, **dadurch gekennzeichnet, dass** das der Exzenter einen ersten Exzenterabschnitt (56) und einen zweiten Exzenterabschnitt (72) umfasst,
das Anlageelement (19) einen ersten Schenkel (33) und einen zweiten Schenkel (34) hat, von denen der erste Schenkel (33) an dem ersten Exzenterabschnitt (56) und der zweite Schenkel (34) an dem zweiten Exzenterabschnitt (72) jeweils um die zweite Drehachse (Y) drehbar gelagert sind, und
das weitere Anlageelement (16) zwischen den Schenkeln (33, 34) des ersten Anlageelements (19) angeordnet ist.

11. Spannklaue (10) nach Anspruch 10, **dadurch gekennzeichnet, dass** die Welle (20) ein erstes Wellenelement (48), ein zweites Wellenelement (52) und ein Verbindungselement (50) umfasst,
der erste Exzenterabschnitt (56) an dem ersten Wellenelement (48) und der zweite Exzenterabschnitt (72) an dem zweiten Wellenelement (52) ausgebildet ist,
das Verbindungselement (50) ein Durchgangsloch (68) aufweist, in das das erste Wellenelement (48) und das zweite Wellenelement (52) hineinragen,
das erste Wellenelement (48) mit dem zweiten Wellenelement (52) um die erste Drehachse (X) drehfest verbindbar ist,
das Verbindungselement (50) an dem Grundkörper (12) um die erste Drehachse (X) drehbar gelagert ist, und
das weitere Anlageelement (16) an dem Verbindungselement (50) um die erste Drehachse (X) schwenkbar gelagert ist.

12. Spannklaue (10) nach Anspruch 10 oder 11, **dadurch gekennzeichnet, dass** der erste Schenkel (33) oder der zweite Schenkel (34) einen Vorsprung (36) hat, wobei zwischen dem Vorsprung (36) und dem Grundkörper (12) eine Schraubendruckfeder (24) und/oder eine Schenkelfeder angeordnet ist, die eine der Anschlagfläche (30) gegenüberliegende weitere Anschlagfläche (84) der Nut (29) gegen den Stift (82) drückt.

13. Spannklaue (10) nach einem der Ansprüche 9 bis 12, **dadurch gekennzeichnet, dass**
die mindestens eine Anlagefläche (17, 18) des weiteren Anlageelements (16) eine an einer zur Anlage an der Gleitschiene (100) vorgesehenen Seite des weiteren Anlageelements (16) ausgebildete erste Anlagefläche (17) und eine zweite Anlagefläche (18) umfasst, wobei die Anlageflächen (17, 18) des weiteren Anlageelements (16) an zwei entgegengesetzten Bereichen der Seite ausgebildet sind.

14. Spannklaue (10) nach Anspruch 13, **dadurch gekennzeichnet, dass** an einer weiteren Seite des weiteren Anlageelements (16) zwei weitere Kontaktflächen (16a, 16b) ausgebildet sind,
das zweite Anlageelement (16) aus dem Grundkörper (12) herausnehmbar und derart wieder in den Grundkörper (12) einsetzbar ist, dass die zwei weiteren Kontaktflächen (16a, 16b) in dem verriegelten Zustand der Klemmstruktur (14) an der Gleitschiene (100) anliegen.

15. Spannklaue (10) nach einem der vorhergehenden Ansprüche, **dadurch gekennzeichnet, dass** an dem Grundkörper (12) eine Kerbverzahnung (26) ausgebildet ist,
das Betätigungsorgan ein Schwenkhebel (22) ist, der einen Rastschuh (63) mit mindestens einer Klinke (27a, 27b) aufweist, und
die Rastklinke (27a, 27b) bei der Schwenkbewegung des Betätigungsorgans (22) von dessen Ausgangsstellung (83) in dessen Sicherungsstellung (23) mit der Kerbverzahnung (26) in Eingriff bringbar ist.

## Claims

1. A clamping claw (10) for attaching to a slide rail (100) of an operating table, which slide rail has a rectangular cross section, with
A base body (12) with at least one contact surface (37, 38) formed for contacting the slide rail (100),
A clamping structure (14) attached to the base body (12) and which comprises a shaft (20) rotatably supported about a first axis of rotation (X) and at least one contact element (19), and
With an actuating component (22) which is connected to the shaft (20) in a rotationally fixed manner and can be brought by a pivoting movement from an initial position (83) into a securing position (23) in which the clamping structure (14) is in a locked state in which the contact surface (37, 38) of the base body and the contact element (19) of the clamping structure (14) rest on the slide rail (100), wherein
The shaft (20) has an eccentric (56, 72) which can pivot about the first axis of rotation (X),
The contact element (19) is pivotably supported about a second axis of rotation (Y) which is stationary relative to the eccentric (56, 72) and is aligned parallel to the first axis of rotation (X),
The contact element (19) is pivoted during the pivoting movement of the actuating component (22) in a pivoting movement from an initial position (81) into a contact position (77) in such a manner onto the slide rail (100) that the clamping structure (14) in the contact position (77) is in the locked state, **characterized in that**
A blocking arrangement (27) is provided which blocks the pivoting movement of the actuating component (22) in an intermediate position between the initial position (83) and the securing position (23) when the pivoting movement of the contact element (19) is blocked in an intermediate position between its initial position (81) and its contact position (77).

2. The clamping jaw (10) according to Claim 1, **characterized in that** a first contact surface (32) and a second contact surface (31) are formed on the contact element (19) from which surfaces in the locked state of the clamping structure (14) the first contact surface (32) rests on a first rail surface (104) of the slide rail (100), which first rail surface faces the operating table, and the second contact surface (31) rests on a second rail surface (106) of the slide rail (100).

3. The clamping jaw (10) according to Claim 1 or 2, **characterized in that** the eccentric (56, 72) is constructed with a cylindrical shape and the longitudinal axis of the eccentric (56, 72) is the second axis of rotation (Y).

4. The clamping jaw (10) according to one of the previous claims, **characterized in that** the blocking arrangement (27) comprises a stop element (82) and a stop surface (30), and
the stop element (82) strikes in such a manner on the stop surface (30) during the blocking of the pivoting movement of the contact element (19) that a pivoting movement of the eccentric (56, 72) caused by the pivoting movement of the actuating component (22) is blocked.

5. The clamping jaw (10) according to Claim 4, **characterized in that** the stop surface (30) is formed on the contact element (19) and that the stop element (82) is firmly connected to the base body (12).

6. The clamping jaw (10) according to Claim 4 or 5, **characterized in that** the stop element is a pin (82) and that the stop surface (30) is formed in a groove (29).

7. The clamping jaw (10) according to Claim 6, **characterized in that** the stop surface (30) of the groove (29) and the pin (82) are aligned parallel to the second axis of rotation (Y).

8. The clamping jaw (10) according to Claim 6 or 7, **characterized in that** the width of the groove (29) is greater than the diameter of the pin (82).

9. The clamping jaw (10) according to one of the previous claims, **characterized in that** the clamping structure (14) comprises another contact element (16) which is supported on the shaft (20) in such a manner that it can pivot about the first axis of rotation (X) and has at least one contact surface (17, 18) which rests in the locked state of the clamping structure (14) on the slide rail (100).

10. The clamping jaw (10) according to Claim 9, **characterized in that** the eccentric comprises a first eccentric section (56) and a second eccentric section (72),
The contact element (19) comprises a first shank (33) and a second shank (34) of which the first shank (33) and the second shank (34) are supported on the first eccentric section (56) and on the second eccentric section (72), respectively, in such a manner that they can rotate about the second axis of rotation (Y), and
The other contact element (16) is arranged between the shanks (33, 34) of the first contact element (19).

11. The clamping jaw (10) according to Claim 10, **characterized in that** the shaft (20) comprises a first shaft element (48), a second shaft element (52) and a connection element (50),
the first eccentric section (56) is formed on the first shaft element (48) and the second eccentric section (72) is formed on the second shaft element (52),
The connection element (50) comprises a through hole (68) into which the first shaft element (48) and the second shaft element (52) extend,
the first shaft element (48) can be connected to the second shaft element (52)in a rotationally fixed manner about the first axis of rotation (X),
the connection element (50) is supported on the base body (12) in such a manner that it can rotate about the first axis of rotation (X), and
the other contact element (16) is supported on the connection element (50) in such a manner that it can pivot about the first axis of rotation (X).

12. The clamping jaw (10) according to Claim 10 or 11, **characterized in that** the first shank (33) or the second shank (34) comprises a projection (36), wherein a helical compression spring (24) and/or a leg spring is/are arranged between the projection (36) and the base body (12) which spring presses another stop surface (84) of the groove (29) located opposite the stop surface (30) against the pin (82).

13. The clamping jaw (10) according to one of Claims 9 to 12, **characterized in that**
The at least one contact surface (17,18) of the other contact element (16) comprises a first contact surface (17) formed on a side of the other contact element (16), which side is provided for contacting the slide rail (100), and comprises a second contact surface (18), wherein the contact surfaces (17, 18) of the other contact element (16) are formed on two opposing areas of the side.

14. The clamping jaw (10) according to Claim 13, **characterized in that** two other contact surfaces (16a, 16b) are formed on another side of the other contact element (16),
The second contact element (16) can be taken out of the base body (12) and set back again into the base body (12) in such a manner that the two other contact surfaces (16a, 16b) rest in the locked state of the clamping structure (14) on the slide rail (100).

15. The clamping jaw (10) according to one of the previous claims, **characterized in that** a notched cogging (26) is formed on the base body (12),
The actuating component is a pivot lever (22) which comprises a catch shoe (63) with at least one latch (27a, 27b), and that
The locking latch (27a, 27b) can be brought during the pivoting movement of the actuating component (22) from its starting position (83) into its securing position (23) into engagement with the notch cogging (26).

## Revendications

1. Mâchoire de serrage (10) destinée à être montée sur une glissière à section transversale rectangulaire (100) d'une table d'opération, avec
un corps de base (12) avec au moins une surface d'appui (37, 38) réalisée pour venir en appui sur la glissière (100),
une structure de serrage (14) montée sur le corps de base (12), qui présente un arbre (20) logé de manière rotative autour d'un premier axe de rotation (X) et au moins un élément d'appui (19), et
un organe d'actionnement (22) relié solidaire en rotation à l'arbre (20), qui peut être amené par un mouvement de pivotement d'une position de départ (83) à une position de blocage (23), dans laquelle la structure de serrage (14) est dans un état verrouillé, dans lequel la surface d'appui (37, 38) du corps de base et l'élément d'appui (19) de la structure de serrage (14) s'appuient sur la glissière (100), dans laquelle l'arbre (20) a un excentrique (56, 72) pouvant pivoter autour du premier axe de rotation (X),
l'élément d'appui (19) est logé de manière pivotante autour d'un deuxième axe de rotation (Y) stationnaire par rapport à l'excentrique (56, 72), qui est orienté parallèlement au premier axe de rotation (X),
l'élément d'appui (19) lors du mouvement de pivotement de l'organe d'actionnement (22) dans un mouvement de rapprochement d'une position initiale (81) à une position d'appui (77) est rapproché de la glissière (100) de telle sorte que la structure de serrage (14) dans la position d'appui (77) est à l'état verrouillé, **caractérisée en ce que**
un agencement de verrouillage (27) est prévu, qui bloque le mouvement de pivotement de l'organe d'actionnement (22) dans une position intermédiaire entre la position de départ (83) et la position de blocage (23), lorsque le mouvement de rapprochement de l'élément d'appui (19) est bloqué dans une position intermédiaire entre sa position initiale (81) et sa position d'appui (77).

2. Mâchoire de serrage (10) selon la revendication 1, **caractérisée en ce qu'**une première surface d'appui (32) et une deuxième surface d'appui (31) sont réalisées au niveau de l'élément d'appui (19), desquelles à l'état verrouillé de la structure de serrage (14), la première surface d'appui (32) s'appuie sur une première surface de rail (104) de la glissière (100) tournée vers la table d'opération et la deuxième surface d'appui (31) s'appuie sur une deuxième surface de rail (106) de la glissière (100).

3. Mâchoire de serrage (10) selon la revendication 1 ou 2, **caractérisée en ce que** l'excentrique (56, 72) est réalisé en forme de cylindre et l'axe longitudinal de l'excentrique (56, 72) est le deuxième axe de rotation (Y).

4. Mâchoire de serrage (10) selon l'une quelconque des revendications précédentes, **caractérisée en ce que** l'agencement de verrouillage (27) présente un élément de butée (82) et une surface de butée (30), et
l'élément de butée (82) lors du blocage du mouvement de rapprochement de l'élément d'appui (19) bute sur la surface de butée (30) de telle sorte qu'un mouvement de pivotement de l'excentrique (56, 72) provoqué par le mouvement de pivotement de l'organe d'actionnement (22) est bloqué.

5. Mâchoire de serrage (10) selon la revendication 4, **caractérisée en ce que** la surface de butée (30) est réalisée au niveau de l'élément d'appui (19) et l'élément de butée (82) est relié fixement au corps de base (12).

6. Mâchoire de serrage (10) selon la revendication 4 ou 5, **caractérisée en ce que** l'élément de butée est une tige (82) et la surface de butée (30) est réalisée dans une rainure (29).

7. Mâchoire de serrage (10) selon la revendication 6, **caractérisée en ce que** la surface de butée (30) de la rainure (29) et la tige (82) sont orientées parallèlement au deuxième axe de rotation (Y).

8. Mâchoire de serrage (10) selon la revendication 6 ou 7, **caractérisée en ce que** la largeur de la rainure (29) est supérieure au diamètre de la tige (82).

9. Mâchoire de serrage (10) selon l'une quelconque des revendications précédentes, **caractérisée en ce que** la structure de serrage (14) comprend un autre élément d'appui (16), qui est logé de manière pivotante autour du premier axe de rotation (X) au niveau de l'arbre (20) et a au moins une surface d'appui (17, 18), qui s'appuie à l'état verrouillé de la structure de serrage (14) sur la glissière (100).

10. Mâchoire de serrage (10) selon la revendication 9, **caractérisée en ce que** l'excentrique comprend une première section d'excentrique (56) et une deuxième section d'excentrique (72),
l'élément d'appui (19) a une première branche (33) et une deuxième branche (34), desquelles la première branche (33) est logée de manière rotative au niveau de la première section d'excentrique (56) et la deuxième branche (34) au niveau de la deuxième section d'excentrique (72) respectivement autour du deuxième axe de rotation (Y), et
l'autre élément d'appui (16) est agencé entre les branches (33, 34) du premier élément d'appui (19).

11. Mâchoire de serrage (10) selon la revendication 10, **caractérisée en ce que** l'arbre (20) comprend un premier élément d'arbre (48), un deuxième élément d'arbre (52) et un élément de liaison (50),
la première section d'excentrique (56) est réalisée au niveau du premier élément d'arbre (48) et la deuxième section d'excentrique (72) au niveau du deuxième élément d'arbre (52), l'élément de liaison (50) présente un trou traversant (68), dans lequel le premier élément d'arbre (48) et le deuxième élément d'arbre (52) font saillie,
le premier élément d'arbre (48) peut être relié solidaire en rotation autour du premier axe de rotation (X) au deuxième élément d'arbre (52),
l'élément de liaison (50) est logé de manière rotative autour du premier axe de rotation (X) au niveau du corps de base (12), et
l'autre élément d'appui (16) est logé de manière pivotante autour du premier axe de rotation (X) au niveau de l'élément de liaison (50).

12. Mâchoire de serrage (10) selon la revendication 10 ou 11, **caractérisée en ce que** la première branche (33) ou la deuxième branche (34) a une saillie (36), dans laquelle un ressort hélicoïdal de compression (24) et/ou un ressort à branches, qui pousse une autre surface de butée (84) de la rainure (29) faisant face à la surface de butée (30) contre la tige (82), est agencé entre la saillie (36) et le corps de base (12).

13. Mâchoire de serrage (10) selon l'une quelconque des revendications 9 à 12, **caractérisée en ce que**
l'au moins une surface d'appui (17, 18) de l'autre élément d'appui (16) comprend une première surface d'appui (17) réalisée au niveau d'un côté de l'autre élément d'appui (16) prévu pour venir en appui sur la glissière (100) et une deuxième surface d'appui (18), dans laquelle les surfaces d'appui (17, 18) de l'autre élément d'appui (16) sont réalisées au niveau de deux zones opposées du côté.

14. Mâchoire de serrage (10) selon la revendication 13, **caractérisée en ce que** deux autres surfaces de contact (16a, 16b) sont réalisées au niveau d'un autre côté de l'autre élément d'appui (16),
le deuxième élément d'appui (16) peut être retiré du corps de base (12) et réinséré dans le corps de base (12) de telle sorte que les deux autres surfaces de contact (16a, 16b) s'appuient à l'état verrouillé de la structure de serrage (14) sur la glissière (100).

15. Mâchoire de serrage (10) selon l'une quelconque des revendications précédentes, **caractérisée en ce qu'**une cannelure (26) est réalisée au niveau du corps de base (12), l'organe d'actionnement est un levier pivotant (22), qui présente un sabot d'encliquetage (63) avec au moins un loquet (27a, 27b), et
le loquet d'encliquetage (27a, 27b) lors du mouvement de pivotement de l'organe d'actionnement (22) de sa position de départ (83) à sa position de fixation (23) peut être mis en prise avec la cannelure (26).
